# EUROPEAN PATENT APPLICATION

(11) **EP 1 182 658 A1**
(43) Date of publication of application: **27.02.2002**
(21) Application number: 00925654.6
(22) Date of filing: 12.05.2000
(51) Int. Cl.: G11B 23/087

(54) **MAGNETIC TAPE CASSETTE AND METHOD OF ANTISTATIC TREATMENT OF SHEETS USED THEREFOR**

(30) Priority: 14.05.1999 JP 13400699
(71) Applicant: FUJI PHOTO FILM CO., LTD., Kanagawa-ken, 250-0193 (JP)
(72) Inventor: Nakane, Takanobu, Odawara-shi, Kanagawa 250-0001 (JP); Morita, Kiyoo, Odawara-shi, Kanagawa 250-0001 (JP); Hiraguchi, Kazuo, Odawara-shi, Kanagawa 250-0001 (JP)
(74) Representative: Klunker . Schmitt-Nilson . Hirsch
(86) International application number: JP0003071
(87) International publication number: WO0070615

(57) **Abstract**

In this magnetic tape cassette, a pair of takeup hubs around which a magnetic tape is wound, is accommodated into a casing constituted by upper and lower halves through sheets on both sides thereof. A height positional limitation rib is on a contact surface between the lower half and tape takeup rings of the takeup hubs or a thickened portion over the full surface near an tape outlet of the lower half in which the sheet is not provided. Further, a contact between the takeup hubs and the upper and lower halves is formed by elastic material or a member into which elastic material is inserted. Further, clearances between the takeup hubs and the upper and lower halves in vertical horizontal directions are limited to predetermined values. Further, antistatic agent is impregnated onto the sheet. The tape running position, especially, level of the height is easily limited, set and adjusted without fail to make it possible to stabilize the tape running. Further, a part of a side wall of the lower half is cut, resulting increasing a winding-in area of the tape and to increase capacitance of storage without increasing the cassette size. Further, it is possible to transfer plural magnetic tape cassette in an automatic cassette conveyance device.

## Description

### TECHNICAL FIELD

The present invention relates to a magnetic tape cassette, more particularly to a magnetic tape cassette for securely limiting a running position of a magnetic tape, further to a magnetic tape cassette in which a takeup hub of a magnetic tape is improved in adjusting the running position of the magnetic tape, further to a magnetic tape cassette in which a wound position limit of the magnetic tape to the takeup hub is defined, and further to a magnetic tape cassette in which a magnetic tape winding area is enlarged without changing a cassette size.

Further, the present invention relates to a structure of a magnetic tape cassette suitable for being inserted and used in an automatic cassette conveyance device for accommodating and sequentially conveying a plurality of magnetic tape cassette a conveying mechanism.

Furthermore, the present invention relates to an antistatic processing method of sheet (friction sheet) interposed between a magnetic tape and a cassette casing used in a magnetic tape cassette.

### BACKGROUND ART

A small-sized and light-weighed magnetic tape cassette which may record digital sign at a high density is conventionally known. For example, a DDS (digital data storage) for recording digital data of a computer or a DAT (digital audio tape) for recording a music sound or the like as digital data is known as such a small-size magnetic tape cassette.

As well known, in the magnetic tape cassette, an elongated strip-shaped magnetic tape is wound around (suspendingly wound over) takeup hubs and the takeup hubs around which this magnetic tape is would, are rotatably accommodated in a cassette casing. Additionally, a magnetic tape cassette using no-flange reels, for example, a magnetic tape cassette such as the above-mentioned DAT, DDS or the like which has no cassette both-sides usable structure such as an audio tape cassette, in particular, has an upper half, a lower half coupled with the upper half to form a casing, and a slider fitted slidably along a bottom surface and side surfaces of the lower half, and rotatably accommodates a pair of takeup hubs around which the magnetic tape is wound in the cassette casing. In such a magnetic tape cassette, a high density record is applied to the magnetic tape. Accordingly, in order to prevent dust from sticking to the magnetic tape or to prevent user's fingers from touching the magnetic tape, it is necessary to enhance the seal ability of the casing. Therefore, a front lid for covering a front face side exposing the magnetic tape is provided on the upper half and the bottom surface side of the lower half is covered by a slider.

For example, when used a two-reel type magnetic tape cassette, both ends of an elongated strip-shaped magnetic tape are fixed to a pair of takeup hubs, respectively, the magnetic tape is wound around the respective takeup hubs from both ends, the pair of takeup hubs around which the magnetic tape is wound, are rotatably accommodated within a cassette casing formed by the upper half and the lower half coupled in a lid-alignment manner, the magnetic tape between the pair of takeup hubs is tensioned through a predetermined path, and the portion of the magnetic tape tensioned between the pair of takeup hubs is projected correspondingly to the magnetic head of recording/reproducing apparatus such as a tape deck or the like (hereinafter referred to a recording/reproducing apparatus, so that only the magnetic tape corresponding to this projection is exposed to the outside.

The magnetic tape of the projection which may be exposed outside of the cassette casing is provided with a front lid swung between a closing position for covering the magnetic tap and an opening position for exposing the magnetic tape and spring-biased toward the closing position in order to prevent the user's fingers from touching the magnetic layer surface of the magnetic tape or to prevent dust from sticking to the tape. Further, an opening for bringing the magnetic tape into contact with the magnetic head by inserting a tape loading device of the recording/reproducing apparatus when the magnetic tape cassette is loaded onto the recording/reproducing apparatus is provided on the front lower side of the lower half below the projection of the magnetic tape. A slider for closing the opening is provided to be slidable back and forth from the outside in the bottom surface of the lower half. By this slider, the reel shaft insertion holes provided in the bottom surface of the lower half may be simultaneously opened or closed. The slider is always spring-biased in a direction for closing the reel shaft insertion holes and the cassette opening (forward direction).

When such a magnetic tape cassette is to be loaded onto the recording/reproducing apparatus, the slider is rearward-slided by the mechanism within the recording/reproducing apparatus, interlocking with the operation for loading the magnetic tape cassette into the recording/reproducing apparatus, the front lid is moved (rotated) to the closing position, the projection of the magnetic tape is exposed to the outside of the cassette casing by the tape loading device of the recording/reproducing apparatus and tensioned by the tape drawing guide of the recording/reproducing apparatus into contact with the magnetic head and the magnetic tape is arranged in a recordable or reproducible position. Then, the reel shafts (spindles) of the recording/reproducing apparatus inserted from the bottom surface of the takeup hubs are once rotated to wind up the magnetic tape onto one of the takeup hubs, and the magnetic tape fed from the other takeup hub runs while in contact with the magnetic head thereby recording the information onto the magnetic tape or to reproduce the information from the magnetic tape.

By the way, when the magnetic tape is moved up and down in running of the magnetic tape, there is a fear that the tape might not correctly be contacted with the magnetic head, the suitable recording/reproducing operation might not be performed, or any other fault is caused. Accordingly, it is important to suppress the vertical movement (deviation) of the running magnetic tape to enhance the limit accuracy of the running position of the magnetic tape to stabilize the running property.

Therefore, conventionally, in order to limit or adjust the running position of the magnetic tape, there have been various approaches also in magnetic tape cassettes.

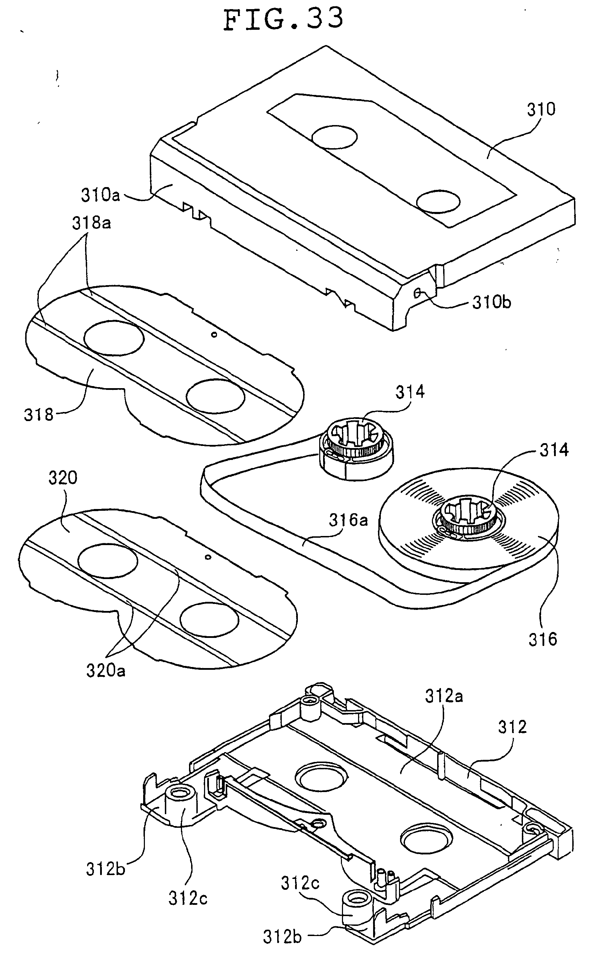

Fig. 33 is an exploded schematic perspective view showing such a magnetic tape cassette.

As shown in Fig. 33, in a magnetic tape cassette, basically, an upper half 310 and a lower half 312 are coupled in a lid-alignment manner to form a casing body which becomes a casing of the cassette, and the tensioned magnetic tape 316 is wound therebetween by a pair of takeup hubs 314, 314 and accommodated through upper and lower friction sheets (hereinafter simply referred to as sheets) 318, 320.

Further, although not shown, a slider is disposed on an outer lower surface of the lower half 312 in order to enhance seal ability against dust proof of the cassette casing.

A front lid 310a is provided on a front face of the upper half 310 rotatably about a pivot shaft 310b for protecting the magnetic tape 316a of the tensioned portion between the pair of takeup hubs 314, 314 when the cassette is not in use.

The sheets 318, 320 have two formed portions 318a, 320a in the longitudinal direction (right and left directions in the drawing) of the cassette, respectively. The sheets 318, 320 reduce the sliding resistance when the takeup hubs 314, 314 are rotated and smoothen the rotation, and simultaneously, support the takeup hubs 314, 314 around which the magnetic tape 316 is wound to serve to limit the height of the hubs by the formed portions 318a, 320a.

Both ends in the longitudinal direction (right and left directions in the drawing) of the bottom surface 312a of the lower half 312 are forwardly projected to define tape outlets 312b. Cylindrical tape guides 312c are erected thereon to tension the magnetic tape 316.

In the magnetic tape cassette in which the flangeless reels are used for running the magnetic tape 316 through the sheets 318, 320 between the takeup hubs 314, 314 around which the magnetic tape 316 is wound and the upper and lower halves 310, 312 as shown in Fig. 33, conventionally, there have been the following methods for limiting the position in height direction of the running position of the magnetic tape 316.

For example, there is a method of limiting at the winding position of the magnetic tape 316 to the takeup hubs 314, 314 or a method of limiting the position by a height of the formed portions 318a, 320a of the sheets 318, 320 (in particular, the formed portion 320a of the sheet 320 disposed between the hub and the lower half 312 in a casing of a flat laying type drive portion for accommodating the magnetic tape cassette on the deck side).

Further, there is a method for the positional limitation at the outlet of the magnetic tape of the magnetic tape cassette as follows. Namely, for example, the overall of the bottom surface 312a of the lower half 312 is thickened, so that the half bottom surface of the tape outlets 312b, 312b is thickened or ribs (convex shape) for tape position limit are provided on the tape outlets 312b, 312b thereby performing the positional limitation by their height. Alternatively, there is a method in which ribs are provided somewhat inside the outlet of the magnetic tape, for example, inside the tape guides 312c of the tape outlets 312b, 312b of the lower half 312, or ribs are provided at corresponding portions inside the upper half 310, or ribs for positioning a prism which is a member for detecting the end of the magnetic tape 316 provided inside the upper half 310 are used to limit the position of the magnetic tape 316.

However, these conventional magnetic tape position limiting methods suffer from the following problems.

Namely, in the method of limiting with the magnetic tape wounding position of the takeup hubs, although it is possible to set the position of the takeup hubs, the magnetic tape is moved to outside the takeup hub limit range and it is impossible to exactly perform the positional limitation.

Further, in the method for positional limitation with the height of the formed portions of the sheets, scattering in manufacture of the height of the formed portions of the sheets is essentially remarkable The possibility that the formed portions might be deformed by a shock is high. Thus, the exact positional limitation cannot be limited.

Further, the method for positional limitation with the thickness of the half, if the overall thickness of the lower half is increased, the weight will be increased. Accordingly, it is impossible to increase the thickness to an extreme extent. Accordingly, it is necessary to set the thickness to a low level, resulting in almost no effect in positional limitation. Further, the outermost circumference of the wound magnetic tape is likely to be loosened because it is difficult to keep the wound tape bulk firm. Accordingly, when the outermost circumferential tape is easily loosened due to the step caused by the difference in sheet thickness and a desired formed height, the tape is tensioned by the tape drawing guide of the deck from the condition that the tape is serpentine so that the tape is not positioned in parallel with the tape drawing guide. Thus, the magnetic tape might be subjected to damage.

Further, in the method for partial height positional limitation with the tape positional limitation ribs, it is possible to select the height of the ribs from a wide range. However, when the tape is somewhat loosened as above-mentioned, the similar phenomenon as above-mentioned occurs between the sheet region and the ribs. Further, in some cases, the tape edge is brought into contact with the rib end so that the tape is subjected to damage. In particular, when the drop or vibration is applied, a great gravitational acceleration is applied thereto, so that the damage is further remarkable because the rib end and the tape edge are brought substantially into point contact with each other.

Further various conventional approaches for adjusting a running position of the magnetic tape in a magnetic tape cassette are as follows.

For example, conventionally, in order to limit the running position (height) of the magnetic tape in the magnetic tape cassette using the flangeless-type takeup hubs, the portion of the lower half which accommodates the takeup hubs is thickened, ribs (convex thick potions) are provided, or the sheet is interposed between the lower half and the takeup hub around which the magnetic tape is wound and the formed portion (drawn portion) is provided in the sheet to limit with the height of the formed portion. Alternatively, the lower half or the takeup hubs are thickened in the portion where the takeup hubs are brought into direct contact with the lower half without any sheet therebetween.

By the way, the sheet (friction sheet) is normally formed by high-density PE (polyethylene). The electric resistance thereof is very high, which is about 10¹⁶ ohm. Accordingly, the sheet itself is easy for charging. The sheet is charged with ease due to the contact or the sliding contact between the sheet and the cassette inner wall surface, the magnetic tape or the takeup hubs. Dust is likely to stick dust on the sheet. This becomes a further problem that the magnetic tape or the takeup hubs are brought into sliding contact with the sheet to generate the peel charge.

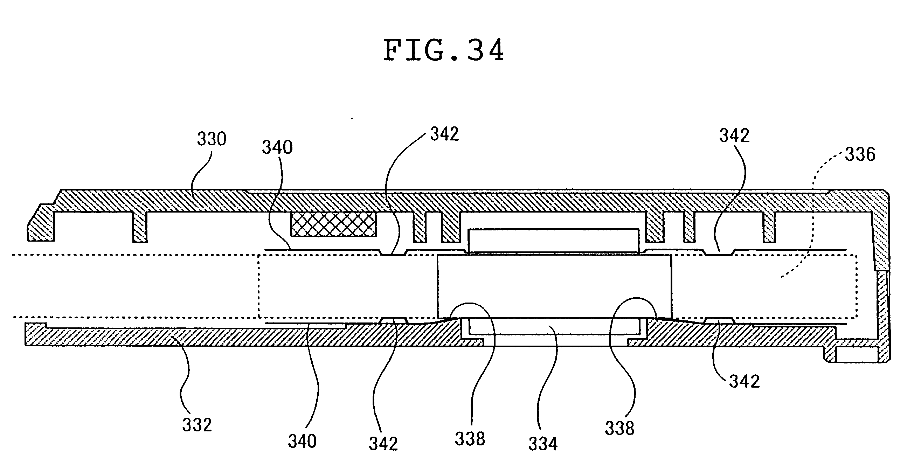

Fig. 34 is a cross-sectional view of an example of a conventional magnetic tape cassette. As shown in Fig. 34, a magnetic tape 336 wound around a takeup hub 334 is accommodated between an upper half 330 and a lower half 332. In this example, a portion 338 of the lower half 332 which is brought into contact with the takeup hub 334 is thickened. Additionally, sheets 340 are disposed on and under the takeup hub 334 around which the magnetic tape 336 is wound. A formed portion 342 is provided in the sheet 340. By this, the positional limitation of the magnetic tape 336 is further performed.

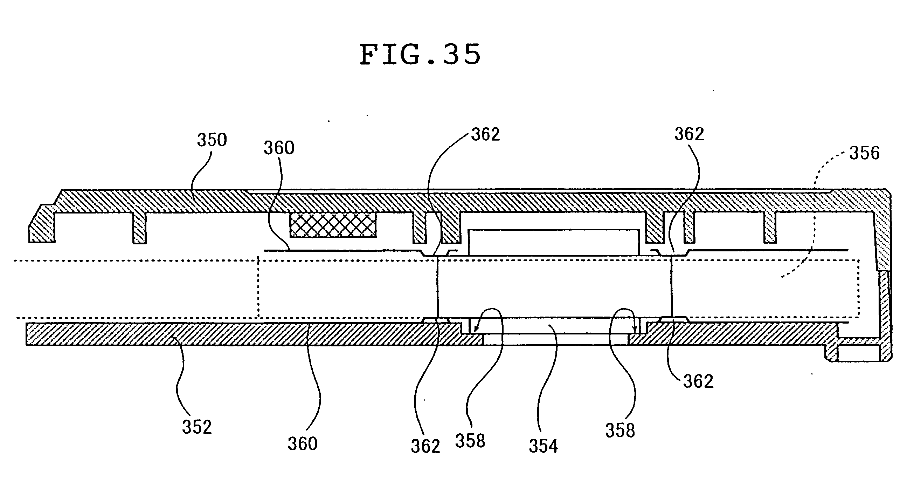

Further, Fig. 35 is a cross-sectional view of another example of a conventional magnetic tape cassette. In the example shown in Fig. 35, the magnetic tape 356 wound around the takeup hub 354 is accommodated between the upper half 350 and the lower half 352. The takeup hub 354 and the lower half 352 are brought into contact with each other at a portion 358 of a hub hole. Further, the sheets 360 are disposed on and under the takeup hub 354.The takeup hub 354 is positioned and limited using the formed portions 362 provided in the sheets 360.

However, the conventional positional limitation methods of the takeup hub suffer from the following further problems.

Namely, if the thickness of the portion of the lower half which serves as the accommodating portion of the takeup hub is increased or the rib (convex and thickened portion) is provided for partially increasing the thickness, deformation such as warpage or shrinkage will occur owing to the difference in molding shrinkage or the change in resin fluidization caused by the thickness change. Further, the lower half is formed in a very complicated shape for imparting the functions such as a slider spring accommodating portion, a slider lock, a dust proof wall, a tape guide or the like in addition to the hub accommodating portion. The local thickness change causes an imbalance in molding of the lower half as a whole. However, if the thickness of the entire lower half is increased, it takes cooling time to prolong the manufacture cycle and increases the material cost and increases its ratio to the overall cost.

Further, when the sheets are interposed, the formed portions are provided in the sheets and the positional limitation is performed depending on height of the formed portions, there is a limitation in the formed portion height, and in addition, if the height is too high, it is impossible to support the weight of the magnetic tape with the formed portion. The deformation occurs due to the vibration upon transportation or due to the drop shock. Thus, it is difficult to perform the positional limitation.

Further, when the lower half and the takeup hub are brought into direct contact (abutment) with each other, a diameter for holding the takeup hub within the cassette is small and the running is unstable against the shock or vibration. Furthermore, in this case, there is a problem that the sliding resistance is increased or the wear of resin is caused because the resin parts are brought into direct contact with each other.

Further, in the conventional magnetic tape cassette using the flangeless reels, the takeup hubs are accommodated rotatably within the cassette casing constituted by coupling the upper half and the lower half. A method is proposed and implemented in which the lower limit position of the takeup hubs is limited by bringing the takeup hubs and the lower half into contact with each other.

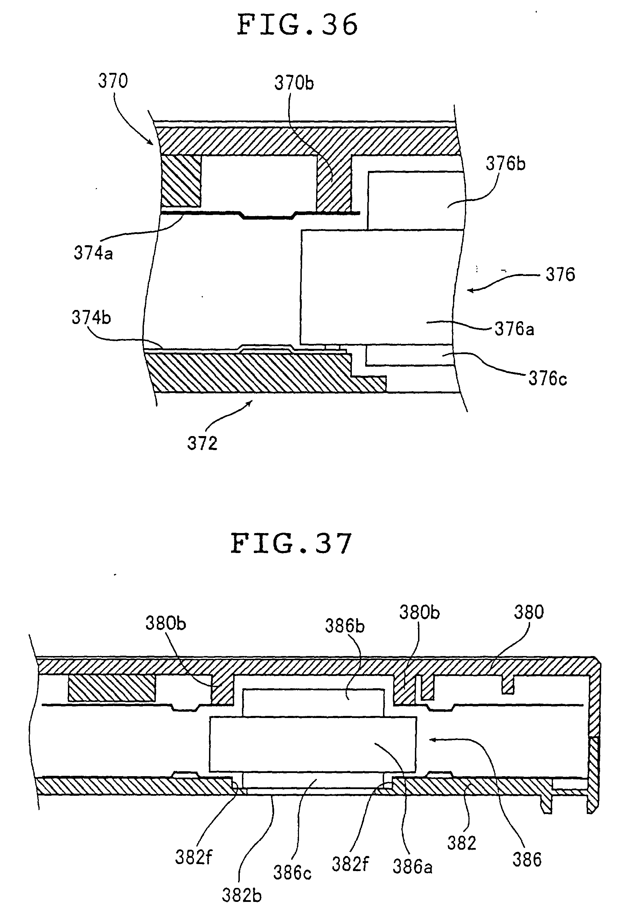

Fig. 36 is a partial cross-sectional view of a conventional magnetic tape cassette including a part of one of takeup hubs and from which the takeup hub has been removed and cut so as to include a shaft of the takeup hub in the axial direction of the takeup hub. The conventional method for limiting the lower limit position of the takeup hub will now be described with reference to Fig. 36.

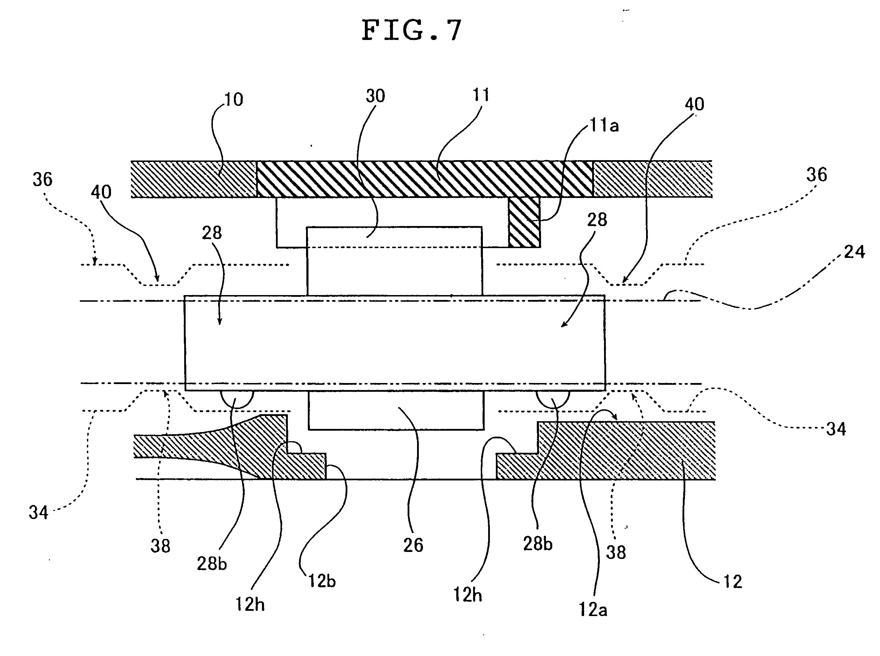

As a method of limiting the lower limit position of the takeup hub, conventionally, there is provided a method in which a lower end face of a winding core 376a of the takeup hub 376 around which the magnetic tape is wound is brought into contact with a lower half 372 or a sheet 374b provided on an inner surface of the lower half 372 thereby determining the lower limit position of the takeup hub 376, for example, a method in which, as shown in Fig. 7, a projection provided downwardly to a lower end face of the winding core 376a of the takeup hub 376 and a sheet 374b provided on an inner surface of the lower half 372 are brought into contact with each other, or a method in which a lower end face of a lower end 376c which is coaxial with the winding core 376a and smaller than the winding core 376a in diameter and formed projecting from the lower end face of the winding core 376a and a lower half 372 or a sheet 374b provided on the inner surface of the lower half 372 are brought into contact with each other to determine the lower limit position of the takeup hub 376.

On the other hand, with respect to the upper limit position of the takeup hub 376, in view of the accuracy of the recording/reproducing apparatus or the warpage of the upper and lower halves of the cassette casing in order to securely rotate the takeup hub while the reel shafts of the recording/reproducing apparatus are inserted into the takeup hubs and engaged with the takeup hubs, a sufficient playingly moving distance is set so that the takeup hubs may be moved up and down within the cassette casing and a space (clearance) may be held.

Namely, clearance in the vertical direction of the takeup hub 376 is set between an upper end face of the winding core 376a and a lower end face of a hub holder 370b rotatably supporting the takeup hub 376 and between an upper end face of the upper end 376b which is coaxial with the winding core 376a and smaller than the winding core 376a in diameter which is formed to project from the upper end face of the winding core 376a and an upper half 370. This is designed assuming a preamble that the magnetic tape cassette is used in a horizontal position.

Namely, there has been no positive method for limiting the movement in the vertical direction of the takeup hubs 376, i.e., limiting the upper limit position. Furthermore, it is impossible to limit the movement of the takeup hubs 376, to run the tape at a constant height or to hold the tape.

The vertical clearance of the takeup hub adopted in design of the conventional magnetic tape cassette having no flange at the upper and lower ends of the reel will give the takeup hub a displacement (rattle) which is playingly movable within the cassette casing, together with the clearance provided in the horizontal direction of the takeup hub. In the conventional magnetic tape cassette, no countermeasure is applied to the shock caused by this displacement so that the damage is given to the takeup hub by the shock caused by the displacement and the damage is given to the upper edge or lower edge of the magnetic tape, so which it is impossible to obtain the sufficient performance of the tape.

In accordance with the higher density tendency of the recent magnetic tape cassette, the magnetic tape in which the width is narrower and the thickness is smaller has been used. Accordingly, rigidity of the magnetic tape is becoming lower and lower. The damage to the tape caused by this displacement depending on playing is no longer negligible.

Further, since the position of the takeup hub is unstable, the height of the magnetic tape is further unstable. The parallelism and verticality with the tape drawing and running guide of the recording/reproducing apparatus are degraded. The stable tape running is degraded.

Recently, this problem becomes more serious or remarkable because a upright type (vertical type to a horizontal plane ) recording/reproducing apparatus for the magnetic tape cassette, i.e., the apparatus in which the magnetic tape cassette is used on a 90-degree-tilt in a desired direction has been put to use.

Further, as above-mentioned, in the conventional magnetic tape cassette, although the takeup hub is accommodated rotatably within the cassette casing constituted by coupling the upper half and the lower half with each other, in view of the accuracy of the recording/reproducing apparatus or the warpage of the upper and lower halves of the cassette casing in order to securely rotate the takeup hub while the spindle of the recording/reproducing apparatus is securely inserted into the takeup hub and engaged securely with the takeup hub, a sufficient playing distance is set so that the takeup hub is moved in the horizontal direction and the vertical direction within the cassette casing and the space (clearance) may be held.

Fig. 37 is a partial cross-sectional view of a conventional magnetic tape cassette including one of takeup hubs, from which the takeup hub has been removed and cut so as to include a shaft of the takeup hub in the axial direction of the takeup hub.

In Fig. 37, the clearance held in the horizontal direction of the takeup hub 386 means an interval between an upper end 386 formed to project from an upper portion of the winding core 386a around which the magnetic tape is wound and a hub holder 380b downward erected vertical to in the upper half 380 for supporting rotatably the takeup hub 386 from the side of the upper half, and an interval between a lower end 386c formed to project from the lower portion of the winding core 386a and a hub holder 382f for forming a wall of the reel shaft insertion hole 382b provided in the lower half 382 for supporting rotatably the takeup hub 386 from the side of the lower half.

The clearance in the horizontal direction of the takeup hub 386 is determined in a range in which the protection of the outermost circumference of the magnetic tape wound around the takeup hub 386 is sufficiently performed and is set at 1 millimeter or more including the interference and extra degree with the side of the recording/reproducing apparatus.

Further, on the other hand, the clearance held in the vertical direction of the takeup hub 386 means an interval generated when the magnetic tape cassette is laid with the lower half 382 being directed downwardly, between an upper end face of the winding core 386a and a lower end face of the hub holder 380b erected in the upper half 380, and between an upper end face of an upper end 386b and the upper half 380.

The clearance in the vertical direction of the takeup hub 386 is set in the range of 0.7 to 1.3 millimeters in view of the accuracy of the recording/reproducing apparatus or the warpage of the upper and lower halves 380 and 382.

Recently, the various miniaturized magnetic tape cassettes have been developed, and it is necessary to record more information within a compact space. For this reason, a magnetic tape in which the width is narrower and the thickness is further smaller has been formed and used.

The clearance in the vertical direction and the horizontal direction of the takeup hub adopted in the conventional magnetic tape cassette will gives the takeup hub a displacement (rattle) playingly movable within the cassette casing. In the cassette using takeup hubs with no flange at both upper and lower ends of the reels such as a DAT or DDS, the shock caused by this playing (saccadic movement) displacement or saccadic movement gives damage to the outermost circumference of the tape and the edges of the magnetic tape which has weaker and weaker rigidity as above-mentioned to degrade the tape performance. There is a problem that the stable tape running may be degraded within the recording/reproducing apparatus.

Further, when the magnetic tape cassette is loaded onto the recording/reproducing apparatus, due to the above-mentioned playing displacement, the takeup hubs would sometimes be tilted within the upper and lower halves. The height of the magnetic tape is unstable and the adverse effect would be applied to the running and draw of the tape between the hubs and the recording/reproducing apparatus. Recently, this problem is becoming more and more remarkable because the vertical type drawing producing apparatus for the magnetic tape cassette, i.e., the apparatus in which the magnetic tape cassette is used tilted at 90 degrees in a desired direction.

Further, in order to record more information on a below-mentioned magnetic tape narrow and thin, it goes without saying which a recording system for enhancing the recording density has to be considered, while simultaneously, there is a demand that the magnetic tape is accommodated within a limited space of the cassette casing as long as possible in length.

In the conventional magnetic tape cassette, the length of the magnetic tape wound around the takeup hub is limited to the magnetic tape length which may be accommodated within the cassette casing in view of the generation of the displacement corresponding to clearance provided in the horizontal direction of the takeup hub. This could not sufficiently meet the above-mentioned requirement that the longer magnetic tape should be wound.

By the way, the slider covers the bottom surface of the lower half from below and is slidably moved back and forth to form the sliding surface between a side walls of the upper and lower halves to form a fittable coupled structure. Therefore, the slider side wall is disposed on the outer side of the wall of the lower half side wall for dust proof. The upper half side wall is disposed on the outside and upper side thereof.

An outermost circumference of the tape winding surface is positioned on a concentric circle of the hub hole of the slider and the lower half. In the cassette side surface, the dimension to the lower half side wall is a limit point. There is a problem that the tape could not be wound over the limit point.

However, a larger storage capacity of storage capacitance is desired in accordance with the recent technical innovation. Therefore, in order to accommodate the tape having a larger winding diameter in the conventional system, the outer contour of the lower half is increased and the slider and the upper half must be formed larger corresponding to the increasing in size of the lower half. Thus, the magnetic tape cassette itself becomes large in size to cause cost or weight problem. Furthermore, in some cases, there is a problem of the need for changing design of the deck or the like using the magnetic tape cassette.

Further, as above-mentioned, in a magnetic tape cassette used in the various recording/reproducing apparatus, the takeup hubs around which the magnetic tape is wound are accommodated in the right and left of the cassette casing, the opening for tape drawing is formed in the front face of this casing, the front lid for opening and closing this opening is provided swingably in the casing front, and the slider is provided to be movable back and forth on the side of the casing bottom surface.

On the other hand, it would be possible to take a structure in which a plurality of magnetic tape cassettes are accommodated in the above-mentioned recording/reproducing apparatus or the outside thereof, an automatic cassette conveyance device for sequentially conveying each of the cassettes by the conveying mechanism, and the magnetic tape cassettes may be automatically continuously fed to the magnetic head.

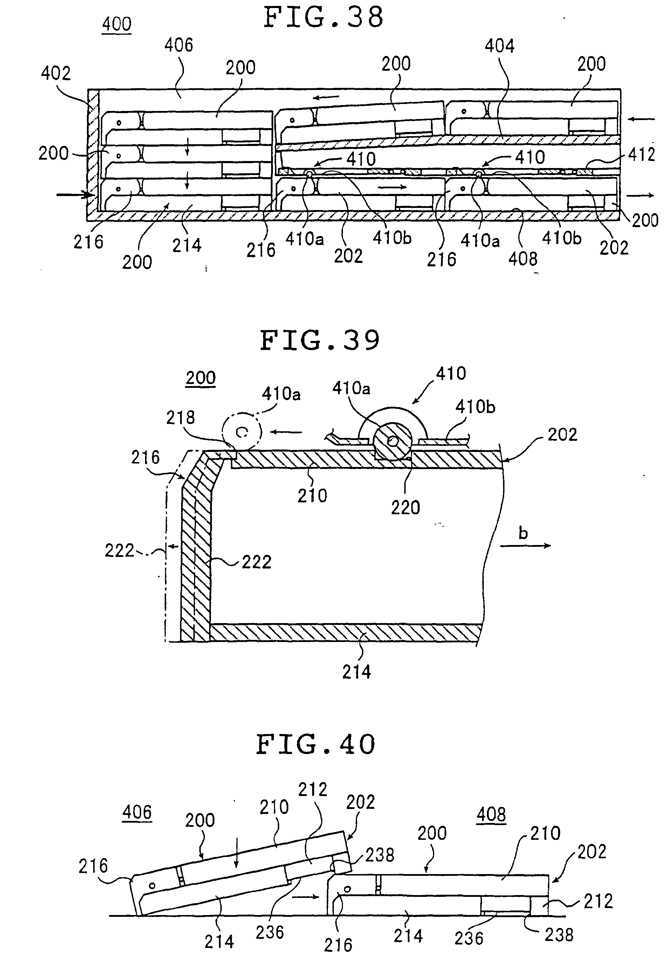

As shown in Fig. 38, this automatic cassette conveyance device 400 is provided to be inserted the magnetic cassette tape 200 on the upper portion of a frame body 402 generally formed in a box-shape-manner and feed the tape out from the lower portion thereof. In the casing shown, seven magnetic tape cassettes 200 may be accommodated in total. Two magnetic tape cassettes 200 may be displaced on the upper guide member 404 formed in a rail-shape-manner on the side wall. Three magnetic tape cassettes 200 may be accommodated in a stacked and overlapped state in a deep accommodating portion 406. Two magnetic tape cassettes 200 may be accommodated in the lower transfer portion 408. The magnetic tape cassettes 200 inserted into on the upper guide member 404 are moved to the deep accommodating portion 406 and fallen down by gravity in accordance with pressing operation of the next magnetic tape cassette 200 and sequentially stacked, and the magnetic tape cassettes 200 in the lowermost stage of the deep accommodating portion 406 are transferred from the deeper portion to the forward ( narrower ) side in a direction indicated by arrows using the conveying mechanism (not shown), caused to sequentially pass through the lower stage transfer portion 408, and fed out. In the lower transfer passage 408, the magnetic tape cassette 200 to be fed is moved to press the rear of the casing 202 on the opposite side of the front lid 216 to the front side in the transfer direction. Here, details of the conveying mechanism, the opening of the frame body 402 into which and from which the conveying mechanism is moved, and the like are not shown.

In the above-mentioned circulation type automatic cassette conveyance device 400, a pressing engagement member 410 for positioning and stopping the magnetic tape cassette 200 to be fed is provided on an upper wall 412 of the upper face of the lower transfer portion 408. Further as shown in Fig. 39, the pressing engagement member 410 is constituted by a plate spring 410b provided with a thin roller 410a on the lower surface side. One end of the plate spring 410b is fixed to an upper wall 412. The above-mentioned roller 410a is brought into pressing contact with the top surface of the casing 202 of the magnetic tape cassette 200 using the biasing force of the plate spring 410b. Then, a recess 220 is formed at the front side of the top surface of the casing 202 in this magnetic tape cassette 200. The roller 410a is engaged with this recess 220 to perform positioning.

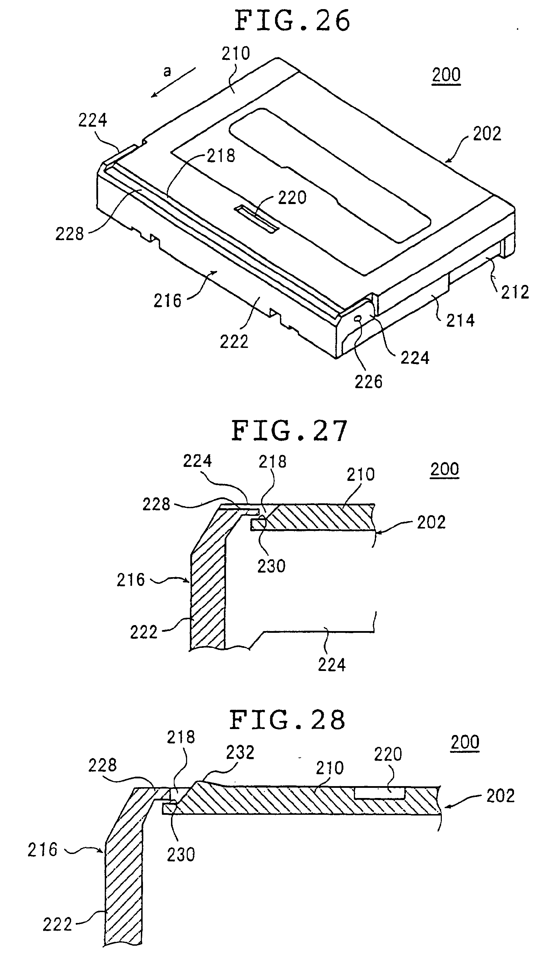

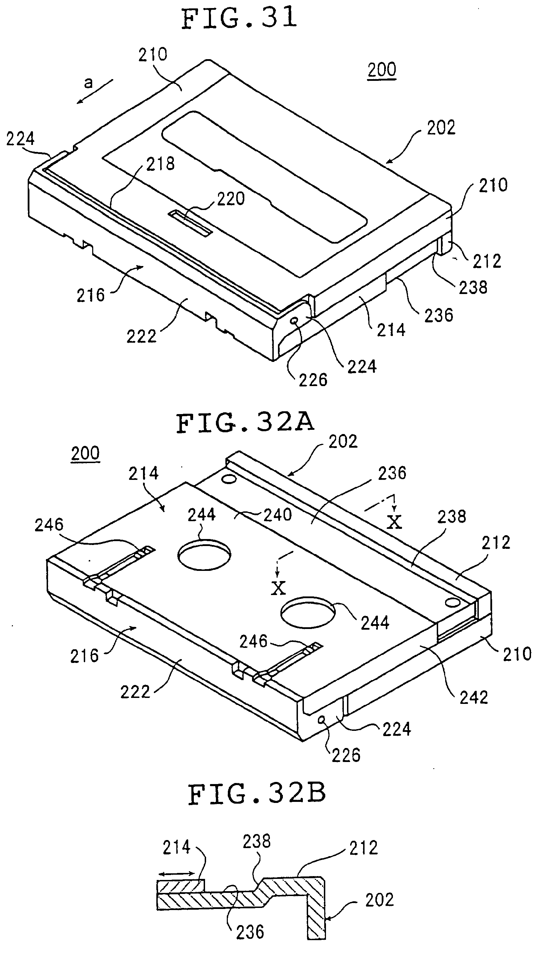

Additionally, the basic structure of the magnetic tape cassette 200 is the same as that of Figs. 26 and 31 to be described later, and the same reference numeral is used to indicate the same component. Accordingly, the explanation therefor should be referred thereto.

Thus, in loading and sequentially conveying the magnetic tape cassettes 200 to such an automatic cassette conveyance device 400 sequentially, when the roller 410a of the pressing engagement member 410 for positioning in response to the delivery thereof moves in pressing contact with the top surface of the magnetic tape cassette 200, there is a problem that the roller 410a engages the front lid 216 and hinders the stable conveyance operation and simultaneously, the extra force is applied to the front lid 216 to generate curvature deformation to open the cover or to cause damage.

Namely, as shown in Fig. 39, when the magnetic tape cassette 200 is conveyed by the conveying mechanism from the condition that the roller 410a pressed by the biasing force of the plate spring 410b is engaged with the recess 220 of the top surface of the casing 202 of the magnetic tape cassette 200 to the rightward direction (the direction indicated by an arrow b), the roller 410a is moved relatively forwardly along the top surface of the casing 202 from the recess 220, enters the gap 218 formed between the top rear end of the front lid 216 and the top surface front end of the casing 202 as indicated by a chained line, and engaged at the upper rear end of the front lid 216. In some cases, the center of the lid 222 of the front lid 216 is elastically deformed using the conveying force to be curved forward, and subjected to the pressing and opening force. In particular, the center of the above-mentioned front lid 216 has a low rigidity and is likely to be deformed even using the weak force so that the gap 218 is widened and the above-mentioned roller 410a is easily engaged.

Additionally, the pressing force of the roller 410a is about 1N to 2N. This is sufficient to press and position the compact magnetic tape cassette 200 but engages the front lid 216 as above-mentioned to cause generation of the pressing and opening force. When the pressing force of this roller 410a is decreased, the engagement to the front lid 216 is less frequently generated but the positioning force is insufficient, resulting in becoming stable.

Further, in loading and conveying the magnetic tape cassettes 200 to such an automatic cassette conveyance device 400 sequentially, when the magnetic tape cassette 200 in the lowermost stage of the deep accommodating portion 406 is transferred to the lower transfer path 408 in response to the delivery and the upper magnetic tape cassette 200 is moved to the lowermost stage, the step of the lower surface rear end of the magnetic tape cassette 200 moving downwardly engages the front lid 216 of the magnetic tape cassette 200 being conveyed to the lower transfer path 408 to hinder the stable conveyance operation and simultaneously, the extra force is applied to the front lid 216 to deform, press and open or to cause the damage.

Namely, as shown in Fig. 40, the front lid 216 for opening/closing the opening for drawing the tape is provided swingably in the front face of the casing 202 of the magnetic tape cassette 200. The slider 214 movable back and forth is provided on the lower surface side of the casing 202. This slider 214 is slidingly moved along the recess 236 formed in the bottom surface of the casing 202. The step 238 is formed in the rear end of the recess 236. Then, in response to the horizontal conveyance of the lower stage magnetic tape cassette 200 from the stacked status in the deep accommodating portion 406 in the automatic cassette conveyance device 400, the upper magnetic tape cassette 200 lies in oblique state with the front end in contact with the lower wall surface. The step 238 of the rear end engages at the top rear end of the front lid 216 of the lower magnetic tape cassette 200. The front lid 216 is pressed forwardly by the conveying force and subjected to the pressing and opening force in some cases. In particular, the gap 218 (see Figs. 26 and 31) is formed between the top surface front end of the casing 202 and the top rear end of the front lid 216. The above-mentioned step 238 is engageed at this portion.

### DISCLOSURE OF THE INVENTION

In view of the above-mentioned problems in the conventional problems, a first object of the present invention is to provide a magnetic tape cassette in which it is possible to accurately limit a position of a magnetic tape in a height direction, in particular, a position in a tape outlet of the cassette.

Further, in view of the above-mentioned problems in the conventional art, a second object of the present invention is to provide a magnetic tape cassette in which it is possible to limit the position of takeup hubs in a height direction, and to easily perform setup of a running height of a magnetic tape and the adjustment thereof.

Further, in view of the above-mentioned problems in the conventional art, a third object of the present invention is to provide a magnetic tape cassette in which a distance of the takeup hubs playingly moving up and down is limited, a height of a magnetic tape wound around the takeup hubs and a position of the takeup hubs are stabilized and the takeup hubs and the magnetic tape may be protected from a shock caused by rattle generated due to the clearance provided around the takeup hubs during conveyance or the like of the magnetic tape cassette.

Furthermore, in addition to the above-mentioned third object, another object of the present invention is to provide a magnetic tape cassette in which it is possible to bias the takeup hubs in a constant direction to further stabilize the height of the magnetic tape and the position of the takeup hubs to make it possible to stabilize the tape running.

Further, in view of these problems of the conventional art, a fourth object of the present invention is to provide a magnetic tape cassette which may limit the movement of the takeup hubs in the horizontal direction, mount with high accuracy the takeup hubs onto a spindle or the like of a recording/reproducing apparatus when the magnetic tape cassette is mounted on the recording/reproducing apparatus, and prevent the interference between the outermost circumference of the magnetic tape wound around the takeup hubs and the inner wall of the cassette.

Further, another object of the present invention is to provide a magnetic tape cassette which may limit the movement of the takeup hubs in an up-and-down direction and stabilize the running and the draw-out of the magnetic tape among the takeup hub, the recording/reproducing apparatus and takeup hub.

Further, in view of the above-mentioned problems in the conventional art, a fifth object of the present invention is to provide a magnetic tape cassette which may increase a winding area of the magnetic tape to provide a more capacitance of storage without increasing a cassette size of the magnetic tape cassette constituted by upper and lower halves and a slider.

Further, in view of the above-mentioned problems in the conventional art, a sixth object of the present invention is to provide a magnetic tape cassette in which a roller is not engaged at the front lid, so that the front lid is not subjected to a pressing and opening force during conveyance by an automatic cassette conveyance device.

Further, in view of the above-mentioned problems in the conventional art, a seventh object of the present invention is to provide a magnetic tape cassette in which a rear end step of an upper magnetic tape cassette lying in an oblique state is not engageed at a front lid of a lower magnetic tape cassette so that the front lid is not subjected to an opening and pressing force during conveyance by an automatic cassette conveyance device.

Further, another object of the present invention is to provide an antistatic method which may, in order to keep running of the magnetic tape running in the magnetic tape cassette, reduce an amount of antistatic agent without degrading the antistatic effect of the sheet (friction sheet) interposed between the magnetic tape and the cassette casing and prevent a side effect caused by the amount of the change preventing agent more than needed thereby making it possible to perform the antistatic process to the sheet used in the magnetic tape cassette.

In order to attain the above-mentioned first object, according to a first aspect of the present invention, there is provided a magnetic tape cassette in which a pair of takeup hubs around which a magnetic tape is wound within a cassette casing formed by coupling an upper half and a lower half in a lid-alignment manner are accommodated by way of an upper sheet and a lower sheet, characterized in that in the lower half, a thickened portion is formed on an overall surface up to the vicinity of a tape outlet of the cassette on a surface of outside of a portion on which the sheet is mounted.

Here, it is preferable that a recess is provided in an interval between the thickened portion and the sheet and an end of the tape outlet corresponded to a tape appearance portion of the lower half.

In order to attain the above-mentioned second object, according to a second aspect of the present invention, there is provided a magnetic tape cassette in which a pair of takeup hubs around which a magnetic tape is wound within a cassette casing formed by coupling an upper half and a lower half in a lid-alignment manner are accommodated, characterized in that ribs for positional limitation in a height direction of the takeup hubs are provided continuously or discretely on concentric circles with relative to centers of diameters of the takeup hubs on bottom surfaces, facing to a bottom surface of the lower half, of tape takeup rings having magnetic tape winding surfaces on outer circumferential side surfaces of the takeup hubs and a sheet is interposed between the takeup hubs and the lower half.

Here, it is preferable that the sheet is a sheet impregnated using an antistatic agent on either one of surfaces of the sheet. Further, it is preferable that the sheet is a sheet impregnated with a partially different amount of antistatic agent on either one of surfaces.

Further, according to another aspect of the present invention, it is possible to provide a method for performing an antistatic process to a sheet interposed between a magnetic tape wound around a winding hub and at least one of inner wall surfaces of an upper half and a lower half of a magnetic tape cassette provided with a housing-shaped cassette casing formed by coupling the upper and lower halves together in a lid-alignment manner and a takeup hub held rotatably within the cassette casing for winding the magnetic tape, characterized in that an antistatic agent is impregnated on either one of surfaces of the sheet.

Here, it is preferable that the one surface is a surface on the side in contact with the lower half. Further, it is preferable that the surface on the side where the antistatic agent of the surfaces of the sheet is not impregnated, of the surfaces of the sheet, is masked in advance. Further, it is preferable that the one surface has a different amount of the antistatic agent to be locally impregnated within the surface. Further, it is preferable that impregnating original material of the sheet using the antistatic agent through an immersion method performs the impregnation of the antistatic agent. Further, it is preferable that the impregnation of the antistatic agent is applied thereto by impregnating the sheet with the antistatic agent in a step of punching out a shape of the sheet from the original material for the sheet. Further, it is preferable that a pretreatment is applied to the sheet by at least one method selected from the group including a plasma process, a corona charging process and an ultraviolet ray process.

The present inventors have found out to make the present invention, as a result of the elaborate studies for solving another problem and attaining the above-mentioned third object, that the elastic material is provided on at least one contact of the upper half and the takeup hub so that the upper end limit position of the takeup hub may be limited, and simultaneously, the magnetic tape may effectively be protected from rattle during transportation or the like of the magnetic tape cassette and the member into which elastic material is inserted is provided in at least one contact of the takeup hub and the upper half, so that the takeup hub may be biased in a constant direction thereby further stabilizing the height of the magnetic tape and the position of the takeup hub.

Namely, a magnetic tape cassette according to a first embodiment of the third aspect of the present invention, in which a takeup hub around which a magnetic tape is wound is accommodated rotatably and a cassette casing is formed by coupling an upper half and a lower half in a lid-alignment manner, is characterized in that at least one contact of the upper half and the takeup hub which are in contact with each other is formed by the elastic material.

Further, a magnetic tape cassette according to a second embodiment of the third aspect of the present invention, in which a takeup hub around which a magnetic tape is wound is accommodated rotatably and a cassette casing is formed by coupling an upper half and a lower half in a lid-alignment manner, is characterized in that at least one contact of the upper half and the takeup hub which are in contact with each other is formed by the member into which the elastic material is inserted.

Then, the contact is formed by the member into which elastic material is inserted and a contact surface of the contact between the upper half and the takeup hub may be formed by the material as same such as that of the upper half or the takeup hub.

Further, the present inventors have found out to make the present invention, as a result of the elaborate studies for solving another problem and the above-mentioned fourth object, that accuracy of the recording/reproducing apparatus side is enhanced, the individual difference among the apparatuses may be improved, being reduced, accuracy on the recording/reproducing apparatus side is improved, so that clearances in the horizontal direction and in the vertical direction between the takeup hub and the upper and lower halves may be more strictly limited and the above-mentioned clearances may be limited thereby solving the problems in the conventional art at once.

A magnetic tape cassette according to a first embodiment of a fourth aspect of the present invention, comprising a winding core around which a magnetic tape is wound, a takeup hub projecting on both sides of the winding core and provided with an upper end and a lower end being coaxial with the winding core and with a smaller diameter than that of the winding core, an upper half provided with a hub holder having a cylindrical inner circumferential surface which is brought into contact with an outer circumferential surface of the upper end and a lower half provided with a hub holder having a cylindrical inner circumferential surface which is brought into contact with an outer circumferential surface of the lower end, wherein the takeup hub around which the magnetic tape is wound is rotatably accommodated and a cassette casing is formed by coupling the upper half and the lower half in a lid-alignment manner, is characterized in that difference between an inner diameter of the hub holder of the upper half and an outer diameter of the upper end of the takeup hub and a difference between an inner diameter of the hub holder of the lower half and an outer diameter of the lower end of the takeup hub are less than 1 millimeter.

Here, it is preferable that a width of the magnetic tape is not greater than 6.5 millimeters and its thickness is not greater than 7 µm.

A magnetic tape cassette according to a second embodiment of the fourth aspect of the present invention, comprising a winding core around which a magnetic tape is wound, a takeup hub projecting from both sides of the winding core and provided with an upper end and a lower end being coaxial with the winding core and with a smaller diameter than that of the winding core, and an upper half and a lower half forming a cassette casing for rotatably accommodating the takeup hub around which the magnetic tape is wound and coupled together in a lid-alignment manner, is characterized in that one of a gap between the upper half and an upper end surface of the winding core of the takeup hub and a gap between the upper half and an upper end surface of the upper end, generated when the lower half is laid downwardly is smaller than 0.5 millimeters.

Here, it is preferable that a width of the magnetic tape is not greater than 6.5 millimeters and its thickness is not greater than 7 micrometers, and a gap between the upper half and the upper surface of the winding core is smaller than the gap between the upper half and the upper surface of the upper end.

In order to attain the above-mentioned fifth object, according to a fifth aspect of the present invention, there is provided a magnetic tape cassette comprising an upper half and a lower half forming a cassette casing for accommodating a pair of takeup hubs around which a magnetic tape is would and coupled together in a lid-alignment manner so as to expose only the magnetic tape of a portion tensioned between the pair of takeup hubs and a slider having a rectangular bottom surface and side walls erected vertically in the bottom surface along both right and left ends in a longitudinal direction and mounted on an outer side lower surface of the lower half, which may open and close reel shaft insertion holes of the bottom surface of the lower half and guide insertion portion provided in a front side of the cassette casing and is slidable back and forth along the bottom surface of the lower half, characterized in that a constant range portion of side walls provided at both right and left ends of the lower half which corresponds to a maximum winding diameter outer circumference of the magnetic tape wound around the takeup hubs is cut away, and a dust proof wall for the cassette casing is formed by side walls of the slider.

According to the sixth aspect of the present invention for attaining the sixth object, a magnetic tape cassette to be loaded onto an automatic cassette conveyance device for accommodating a plurality of magnetic tape cassettes and for sequentially conveying the magnetic tape cassettes using a conveying mechanism, is characterized in that a recess at which a pressing engagement member is engaged by a spring and a roller provided in the automatic cassette conveyance device for positioning and stopping is provided on an upper surface of a casing, a front lid for opening/closing openings for drawing out a tape is provided swingably in a front surface of the casing, a slider which is back and forth movable is provided on a lower surface side of the casing, an upper surface position of a portion of an upper wall of the front lid at least corresponding to the recess is formed to be lower than the upper surface of the casing, and upper surfaces of both side walls of the front lid are substantially at the same position as the upper surface of the casing.

Further, according to this aspect, another magnetic tape cassette is characterized in that a slope in which an upper surface thereof is gradually higher toward the front end is formed at a portion of the casing at least on the fronter side of the recess and facing a gap with an upper wall of the front lid.

Furthermore, according to this aspect, another magnetic tape cassette is characterized in that a reinforcement rib for suppressing deformation of an upper wall of the front lid is formed on at least a bottom surface of a front portion of the recess in the upper wall of the front lid. In this case, it is preferable that the reinforcement rib is formed to be in contact with a part of the casing.

Further, according to this aspect, another magnetic tape cassette is characterized in that a gap between a rear end of an upper wall of the front lid and a front end of an upper surface of the casing is set smaller and an interfering portion with the casing in opening/closing movement of the front lid is removed.

Further, according to the seventh aspect of the present invention for attaining the seventh object, a magnetic tape cassette to be loaded onto an automatic cassette conveyance device for accommodating a plurality of magnetic tape cassettes and for sequentially conveying the magnetic tape cassettes using a conveying mechanism is characterized in that a front lid for opening/closing openings for drawing out a tape is provided swingably in a front surface of the casing, a slider which is movable back and forth is provided on a lower surface side of the casing, a recess through which the slider is swung is provided in a bottom surface of the casing, and a step of a rear end of the recess is formed by a slant surface or a curved surface.

### BRIEF DESCRIPTION OF THE DRAWINGS

Fig. 1 is an exploded perspective view showing the schematic structure of one example of a magnetic tape cassette in accordance with one embodiment of the present invention.
Fig. 2 is an exploded perspective view of one example showing a sheet to be interposed between a magnetic tap wound around the magnetic hub and accommodated within the magnetic tape cassette shown in Fig. 1 and halves.
Fig. 3 is a plan view showing a state in which the magnetic tape and the sheet shown in Fig. 2 are assembled into the lower half shown in Fig. 1.
Fig. 4A is a front view of the lower half shown in Fig.3 and Fig. 4B is a frontal view showing on a large scale a portion B encircled by a circle in Fig. 4A.
Fig. 5A is a schematic illustration showing an immersion method in which sheet material is fully dipped into an antistatic agent and Fig. 5B is an illustration showing a method in which only one side of the sheet original is brought into contact with the antistatic agent.
Fig. 6 is a plan view showing a state in which the magnetic tape and the sheet shown in Fig. 2 are assembled into the lower half shown in Fig. 1.
Fig. 7 is a partial cross-sectional view of the magnetic tape cassette, in which the lower half shown in Fig. 6 is further assembled with the upper half, taken along the line VII-VII of Fig. 6.
Fig. 8 is a plan view of the takeup hub in accordance with this embodiment, which is viewed from the lower half side.
Fig. 9 is a cross-sectional view taken along the line IX-IX shown in Fig. 8.
Fig. 10 is a partial cross-sectional view showing another example according to the present embodiment in the same manner as in Fig. 7.
Fig. 11 is an exploded perspective view showing the schematic structure of another embodiment of the magnetic tape cassette according to the present invention.
Fig. 12 is a partial cross-sectional view of one example taken along the line II-II of the entire magnetic tape cassette shown in Fig. 11.
Fig. 13 is an enlarged cross-sectional view of a part A showing the structure in accordance with one example of the magnetic tape cassette according to a first embodiment shown in Fig. 12.
Fig. 14 is an enlarged cross-sectional view of a part A showing the structure in accordance with another example of the magnetic tape cassette according to the first embodiment shown in Fig. 12.
Fig. 15 is an enlarged cross-sectional view of a part A showing the structure in accordance with another example of the magnetic tape cassette according to the first embodiment shown in Fig. 12.
Fig. 16 is an enlarged cross-sectional view of a part A showing the structure in accordance with another example of the magnetic tape cassette according to a second embodiment shown in Fig. 12.
Fig. 17 is a partial cross-sectional view of an overall magnetic tape cassette, shown in Fig. 11, according to another example taken along the line II-II and a view illustrative of the magnetic tape cassette in accordance with a first embodiment of a fourth aspect of the present invention.
Fig. 18 is an enlarged cross-sectional view of a part C of the magnetic tape cassette shown in Fig. 17 and a view illustrative of one example of the magnetic tape cassette according to a second embodiment of the fourth aspect of the present invention.
Fig. 19 is an enlarged cross-sectional view of a part C of the magnetic tape cassette shown in Fig. 17 and a view illustrative of another example of the magnetic tape cassette according to a second embodiment of the fourth aspect of the present invention.
Fig. 20 is a plan view of a lower half shown in Fig. 1.
Fig. 21 is a perspective view showing a state of combination of the lower half and the slider shown in Fig. 1.
Fig. 22 is a plan view showing one example of a lower half of the magnetic tape cassette in accordance with one embodiment of the present invention.
Fig. 23 is a perspective view of a lower half shown in Fig. 22.
Fig. 24 is a perspective view showing a state of combination of the lower half and the slider shown in Fig. 23.
Figs. 25A, 25B and 25C are side elevational views showing another example of cutaway of a side wall of a lower half, respectively.
Fig. 26 is a schematic perspective view showing a first embodiment of the magnetic tape cassette in accordance with a sixth aspect of the present invention.
Fig. 27 is a cross-sectional view of a front center of the magnetic tape cassette shown in Fig. 26, from which its internal structure has been removed.
Fig. 28 is a central cross-sectional view of the magnetic tape cassette in accordance with the second embodiment of this aspect, from which the internal structure of the upper portion of the front lid and the upper half front end has been removed.
Fig. 29 is a central cross-sectional perspective view of the magnetic tape cassette in accordance with the third embodiment of this aspect, from which the internal structure of the upper portion of the front lid and the upper half front end has been omitted.
Fig. 30 is a central cross-sectional view of the magnetic tape cassette in accordance with the fourth embodiment of this aspect, from which the internal structure of the upper portion of the front lid and the upper half front end has been omitted.
Fig. 31 is a perspective view of an upper surface side of a magnetic tape cassette according to one embodiment of the present invention.
Fig. 32A is a perspective view of a lower surface side of the magnetic tape cassette shown in Fig. 31, and Fig. 32B is a cross-sectional view taken along the line X-X of Fig. 32A from which an internal structure has been omitted.
Fig. 33 is an exploded perspective view showing a schematic structure of a conventional magnetic tape cassette.
Fig. 34 is a partial cross-sectional view showing the positional limitation of the conventional takeup hubs.
Fig. 35 is a partial cross-sectional view showing the positional limitation of the conventional takeup hubs in accordance with another example.
Fig. 36 is a partially enlarged cross-sectional view of one example of a conventional magnetic tape cassette.
Fig. 37 is a partial enlarged cross-sectional view of one example of a conventional magnetic tape cassette.
Fig. 38 is a schematic cross-sectional view of one example of an automatic cassette conveyance device.
Fig. 39 is a cross-sectional view showing a primary part from which the internal structure has been removed for showing the positioning state of the magnetic tape cassette in the automatic cassette conveyance device.
Fig. 40 is a frontal view showing the main part showing the conveying state of the conventional magnetic tape cassette in the automatic cassette conveyance device.

### BEST MODE FOR EMBODYING THE INVENTION

A magnetic tape cassette according to the present invention and a sheet antistatic processing method used therefor will now be described with reference to the preferred embodiment shown in the accompanying drawings will now be described in detail.

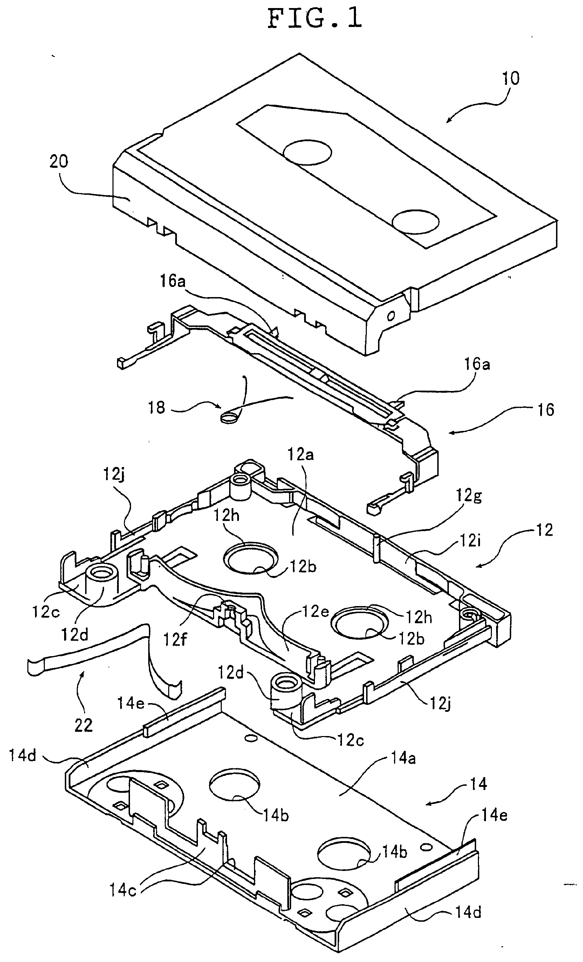

First of all, referring to Figs. 1 to 4, a magnetic tape cassette in accordance with a first aspect of the present invention will be described in detail.

Fig. 1 is an exploded schematic perspective view showing one embodiment of the magnetic tape cassette in accordance with a first aspect of the present invention. The magnetic tape cassette according to the present aspect is mainly constituted by an upper half 10 and a lower half 12 constituting a casing which becomes a casing of the cassette coupled in a lid-alignment manner and a slider 14 mounted to be slidable back and forth in an outer lower portion of the lower half 12.

A magnetic tape tensioned and wound around a pair of takeup hubs is accommodated in the casing of the cassette constituted by the upper half 10 and the lower half 12 as described later. A brake member 16 is provided on the upper half 10 for prohibiting the rotation of the takeup hubs in order not to rotate the takeup hubs not to loose the magnetic tape while the cassette is not in use. The brake member 16 has two brake pieces 16a, 16a. The braking pieces 16a, 16a are engaged with gears provided on the takeup hubs. While the cassette is not in use, the braking member 16 is biased by a brake spring 18 which is a coiled spring so that the above-mentioned brake pieces 16a, 16a are engaged with the above-mentioned gears.

Further, while the cassette is not in use, a front lid 20 is provided on a front face of the upper half 10 for protecting the magnetic tape tensioned between the pair of takeup hubs.

The lower half 12 has reel shaft insertion holes 12b, 12b for inserting reel shafts into the cassette casing at the rectangular bottom surface 12a in use of the cassette. Both ends of the bottom surface 12a in the longitudinal direction (right and left directions in the drawings, hereinafter simply referred to as right and left) form tape outlet (hereinafter also referred to as a projection) 12c, 12c extending forwardly. Steps are formed around these reel shaft insertion holes 12b, 12b to form takeup hub accommodating portions 12h, 12h. Further, cylindrical ribs 12d, 12d for guiding the magnetic tape are provided in the right and left tape outlets 12c, 12c. The space between the right and left tape outlets 12c, 12c is a space into which a so-called tape loading device provided on a recording/reproducing apparatus (deck) side onto which the magnetic tape cassette is loaded.

Further, a wall-like member 12e obtained by continuously providing two divided sleeve-shaped ribs' in an inverted V-shape manner is erected on the bottom surface 12a of the lower half 12. A post-like rib 12f is provided to the center front thereof. Then, a V-shaped plate spring 22 is inserted between this post-shaped rib 12f and the above-mentioned wall-like member 12e.

Further, side walls 12i and 12j, 12j extending normally to the bottom surface 12a are provided on the rear side and both sides of the lower half 12 and are coupled in a lid-alignment manner with the like side walls provided on the upper half 10 thereby enhancing sealing ability within the casing against dust proof and to keep strength of the casing.

The slider 14 is slidably back and forth moved of the cassette in contact with the bottom surface 12a of the lower half 12 from below. When the slider 14 is located forwardly, the space between the right and left tape outlets 12c, 12c of the above-mentioned lower half 12 and the reel shaft insertion holes 12b, 12b are closed using the bottom surface 14a of the slider 14 against dust proof. Further, when the slider 14 is located backward, the space between the right and left tape outlets 12c, 12c of the above-mentioned lower half 12 is released, and simultaneously, the two holes 14b, 14b provided in the bottom surface 14a of the slider 14 conform to the reel shaft insertion holes 12b, 12b of the above-mentioned lower half 12. The slider 14 is automatically located rearward by the action of the device within the deck when the cassette is loaded on the deck. However, while the cassette is not in use, the slider is located forwardly by the above-mentioned V-shaped plate spring 22. Wall-shaped ribs 14c are provided in the front of the slider 14 for accommodating the biasing force of this V-shaped plate spring 22.

Further, the slider 14 has engagement sliding portions 14e, 14e to be fittingly inserted into sliding grooves formed between the right and left side walls 12j, 12j of the lower half 12 and the right and left side walls of the upper half 10 at the top end inner edges of both the right and left side walls 14d, 14d thereof. The engagement sliding portions 14e, 14e are rectangular parallelepiped members having the lower faces in engagement and sliding contact with the top surfaces of the right and left side walls 12j, 12j of the lower half 12.

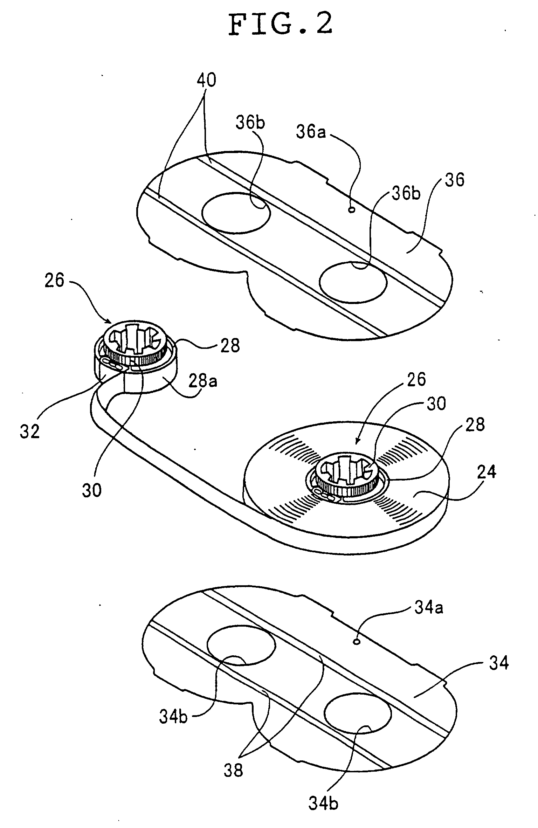

A magnetic tape wound around a pair of takeup hubs is accommodated by way of friction sheets (hereinafter also simply referred to as sheets) interposed on both upper and lower sides thereof between the upper half 10 and the lower half 12. The magnetic tape wound around the pair of takeup hubs and the sheets are shown in a perspective view of Fig. 2.

As shown in Fig. 2, the magnetic tape 24 is wound around the pair of takeup hubs 26, 26. The takeup hub 26 has a tape takeup ring 28 around the outer circumference of the hub 26. The side surface of the ring forms a magnetic tape winding surface 28a. A gear 30 is provided on an upper portion on the inner circumferential side of the takeup hub 26. The brake piece 16a of the above-mentioned brake member 16 is engaged with this gear 30 thereby limiting the rotation of the takeup hub 26.

Additionally, a part of the tape takeup ring 28 forms a removable small piece 32 for fixing the end of the magnetic tape 24.

Further, when the takeup hubs 26 around which the magnetic tape 24 is wound is accommodated in the cassette, the sheets 34, 36 are interposed on the upper and lower sides thereof.

These sheets 34, 36 are positioned by passing holes 34a, 36a through the rib indicated by reference character 12g of the lower half 12 of Fig. 1, respectively. At this time, the two holes 34b, 34b provided in the sheet 34 conform to the holes 12b, 12b of the lower half 12. The takeup hubs 26, 26 are disposed hereto. The two holes 36b, 36b provided in the sheet 36 correspond to the positions of the takeup hubs 26, 26. The gears 30, 30 are projected therefrom. Further, the sheets 34, 36 have two formed portions 38 and 40 in the right and left directions of the cassette, respectively. The sheets 34, 36 reduce the sliding resistance when the takeup hubs 26 rotate and smoothen the rotation. Simultaneously, the sheets serve to support the takeup hubs 26 around which the magnetic tape 24 is would by the above-mentioned formed portions 38, 40 to limit the height.

The schematic structure of the magnetic tape cassette according to one aspect of the present invention has been described above.

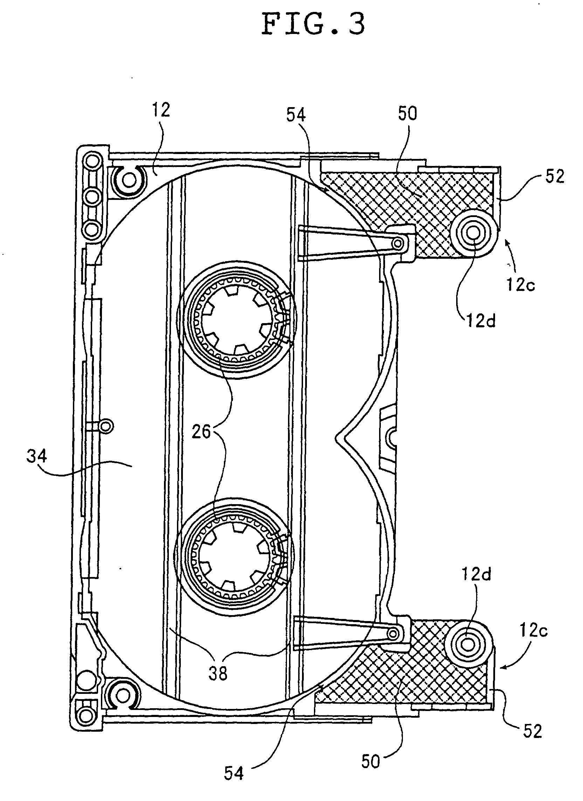

Fig. 3 is a plan view showing a condition that the sheet 34 and the takeup hubs 26, 26 (magnetic tape 24 is omitted) is arranged on the lower half 12.

According to this aspect, in order to accurately perform the positional limitation in the height direction of the magnetic tape, convex portions (thickened portion) are provided over the entire surface of the portions from the outside of the portion of the lower half bottom surface where the sheet is applied to the tape outlet.

Namely, in Fig. 3, the portions indicated by hatching in the tape outlets 12c, 12c at both the right and left ends of the lower half 12 are the thickened portions 50, 50.

As shown in Fig. 3, in this aspect, each thickened portion (convex portion) 50 is provided in the overall from the outside of the portion of the lower half 12 where the sheet 34 is applied to the tape outlet 12c. Then, the outlet end 52 of the tape outlet 12c is preferably formed not to be thickened but low (i.e., as a recess) in order to prevent the engagement of the magnetic tape. However, if a remarkable step is formed with respect to the thickened portion 50, there is a fear that the edge of the tape might strike it so that the tape might be damaged. Accordingly, it is possible to provide a taper which is lowered toward the outlet end 52 from the thickened portion 50.

Further, a gap (recess) 54 is provided along a border line with the sheet 34, formed concentrically along the outer circumference of the sheet 34. This is because the dimensional non-uniformity in manufacture, the movable range of the magnetic tape and the tilt of the sheet 34 are considered. It is preferable to thus provide the gap 54 between the sheet 34 and the thickened portion 50. However, without providing any gap 54, it is also possible to bring the thickened portion directly into contact with the outer circumference of the sheet 34 to intentionally utilize such arrangement for positioning the sheet 34.

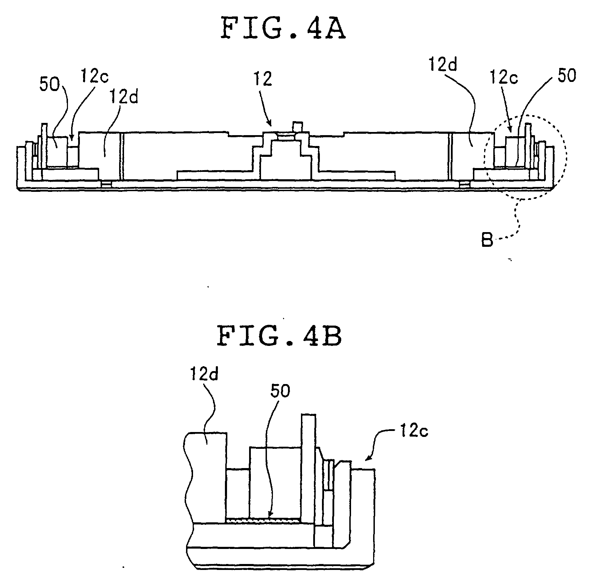

Fig. 4A is a front view of the lower half 12 of Fig. 3. Further, the portion surrounded by a circle B of Fig. 4A is shown on an enlarged scale in Fig. 4B. As shown in Fig. 4A or Fig. 4B, the magnetic tape (not shown) runs along the tape guides 12d, 12d. The thickened portion 50 is provided on the entire surface of the tape outlet 12c, so that the positional limitation of the tape between the tape winding to the cassette outlet may be performed reliably. The positional limitation may be performed to bring the tape within a lower height which is needed at minimum even when the tape is not running.

The increase amount (convex amount) of the thickness of the above-mentioned thickened portion 50 is preferably equal to or less than the thickness of the sheet 34 (0.1 millimeters) or equal to or less than the height of the formed portion 38 of the sheet 34. However, it is possible to select it suitably by taking into consideration other component structure, shape design or the like.

Thus, according to the present embodiment, the positional limitation in the height direction of the tape at the tape outlet of the cassette is accurately performed. When the tape is used again in another deck after not being used for a while or after the change of the winding height or non-uniformity of the tape occurred subsequent to its used in various and different recording/reproducing deck, with respect to tape drawing guides of any deck, even if there is non-uniformity in height of the drawing guides, the tape height of the outermost circumference of the tape can be kept substantially straight, and the tape is brought into contact with the drawing guides of the deck at a right angle to be drawn out. Thus, there is no damage to the tape.

According to the present embodiment, even if the tape has a loosened portion, in the same manner as above-mentioned, it is possible to perform accurate positional limitation. Further, in a case where the tape is tensioned apart from the half, there is no problem as in the conventional case.

As above-mentioned, according to this embodiment, since the thickened portion (convex portion) is provided substantially over the entire surface of the movable range of the tape up to the vicinity of the tape outlet on the outer surface of the sheet mounting portion of the lower half, it is possible to accurately perform accurate positional limitation in the height direction at the tape outlet of the cassette.

The magnetic tape cassette according to the first aspect of the present invention is basically constructed as above-mentioned.

A magnetic tape cassette according to a second aspect of the present invention and a processing method for preventing charging of sheet used in the same will now be described in detail with reference to Figs. 1 and 2 and Figs. 5A to Fig. 10.

First of all, a processing method for preventing charging of sheet used for the magnetic tape cassette will be described.

Note that the sheet 34 to be interposed between the takeup hub 26 and the lower half 12 is formed by high density PE, and as above-mentioned, the sheet itself has a high electric resistance (about 10¹⁶ ohm). Therefore, there is a problem of dust adhesion due to the charging thereof. Accordingly, it is preferable that antistatic agent such as mixture including, for example, four class ammonium salt or the like is impregnated in the sheet 34 so that the electric resistance is decreased to about 10⁹ ohm to 10¹² ohm.

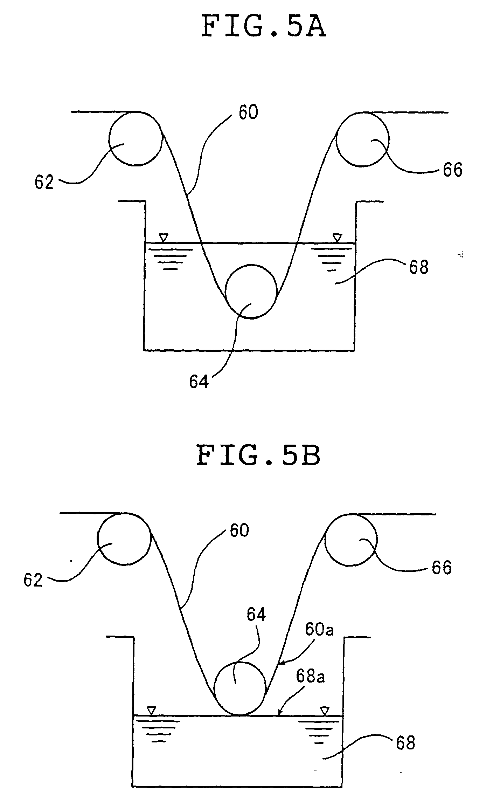

There are various methods for impregnating the antistatic agent into the sheet 34. For-example, there is an impregnating method which utilizes the characteristics that the sheet 34 formed by high density PE is porous, or a coating method of using the coater or the like, or spraying the antistatic agent to the sheet 34. Among these methods, in the immersion method, as shown in Fig. 5A, elongated original material 60 of the sheet 34 is completely dipped in the antistatic agent 68 while being conveyed by the guide rollers 62, 64, 66 to immerse the entire sheet surface using the antistatic agent bath.

However, according to the immersion method or the coating method, since the antistatic agent 68 merely enters the minute holes beforehand formed in the sheet original material 60 itself and is dried and stuck therein, there is a fear that the agent might fall apart therefrom even with a slight shock. Accordingly, in accordance with the immersion method for completely dipping the sheet original material 60 in the antistatic agent 68 or the method of coating or spraying the agent, since the antistatic agent 68 is immersed on both sided surfaces of the sheet 34, omission of the antistatic agent 68 is likely to occur on the side in sliding contact with the magnetic tape. The substances thus omission therefrom are stuck to the edge of the magnetic tape to cause contamination or the like, resulting in possible degradation of the product performance or the outer appearance.

Further, there can also be conceived a method for using as a sheet in which the antistatic agent 68 is kneaded into the sheet material as the sheet 34. However, in view of the sliding characteristics with the magnetic tape and the strength of the sheet sufficient for preventing wear, flaw or chipping due to running of the tape or the like, a material into which the antistatic agent 68 could not be kneaded, for example, the material such as super high molecular PE or the like is increasingly used as the material of the sheet 34. Thus, if the antistatic material 68 could not be kneaded into the sheet material as above-mentioned, in order to obtain the same or greater antistatic effect depending on the material of the sheet, it is necessary to increase the amount of immersion or coating of the antistatic material 68.

Therefore, when the antistatic agent is applied to the sheet 34 in accordance with the coating method, owing to increasing the amount of the antistatic agent, the antistatic agent has to be applied over the entire sheet. The antistatic agent is thus further coated even on the portion other than the portion which needs the antistatic agent. There had occurred a problem that the antistatic agent coated in the unnecessary portion is transferred to the magnetic tape.

Therefore, it is desired to reduce the amount of the antistatic agent without degrading the antistatic effect, to improve, for example, secondary harm due to the antistatic agent 68 such as those caused by the transfer of the antistatic agent 68 to the magnetic tape.

The present inventors have found out that it is possible to solve the above-mentioned problems by making the area of the sheet surface to be immersed with the antistatic agent 68 to a minimum depending upon the purposes of the immersion.

For example, it is preferable to immerse any surface of the sheet 34 in the antistatic agent 68. In this case, the "either one surface" is directed to a surface of the sheet 34 which is in sliding contact with the magnetic tape 24 wound around the takeup hub 26 or a surface thereof not in sliding contact with the magnetic tape 24. In view of preventing conveying of the antistatic agent 68 to the magnetic tape 24, out of the surfaces of the sheet 34, it is most preferable to impregnate the antistatic agent 68 on the surface not in contact with the magnetic tape 24.

Then, it is preferable to impregnate the antistatic agent 68 only on any surface of the sheet 34, and to apply in advance a masking on the surface of the sheet 34 on which the antistatic agent 68 is not impregnated so that the antistatic agent 68 is not stuck onto the surface on which the antistatic agent 68 is not needed by infiltration of the agent through the sheet or transferring thereof on the roller to roll up the sheet original. For the method of masking, it is possible to take a method of bonding an intermediate paper or a well known masking tape on a surface of the sheet original material 60 on which the antistatic agent 68 is not to be applied, or a method of applying a well known masking compound, for example.

Further, in order to suitably impregnate the antistatic agent 68 into a necessary portion to reduce the amount of the antistatic agent, it is preferable to change the amount of the impregnation of the antistatic agent 68 in either one surface of the sheet 34 by each of regions of the surface. The region is determined on a basis of whether or not it is a region frequently slidingly contacted by the lower half 12, the takeup hub 26 or the magnetic tape 24. For example, in the case where the sheet 34 has the formed portion 38, it is preferable to change the amount of impregnation of the antistatic agent 68 between the formed portion 38 and the portion other than that, thereby reducing the amount of the impregnation of the antistatic agent 68 in the region other than the formed portion 38 or to apply no agent thereto. Inversely, it is possible to reduce the amount of impregnation of the antistatic agent 68 only on the region of the formed portion 38 or to impregnate no agent thereto.

The area of the sheet 34 to which the antistatic agent 68 is to be applied, has been described so far. A method for impregnating the antistatic agent 68 on the above-mentioned area will now be described.

As a method for impregnating the antistatic agent 68 to the sheet 34, there is a method of impregnating the antistatic agent 68 on one surface of the sheet original material 60 of the sheet 34, for example, a method of dipping only one surface rather than the entire surface of the sheet original material 60, for example the surface 60a which is not in sliding contact with the magnetic tape, as shown in Fig. 5B. In this case, it is necessary to adjust the liquid level 68a or the guide roller 64 so that the one surface 60a of the sheet original material 60 is just in contact with the liquid level 68a of the antistatic agent 68.

Further, there is also a method of coating the antistatic agent 68 on either one surface of the sheet 34 when the sheet 34 is punched out by cut-out-size. This method is particularly preferable in a case where the amount of the impregnation of the above-mentioned antistatic agent 68 is changed in accordance with regions of the surface.

Further, in accordance with at least one method selected from the group constituted by the known plasma process, corona discharge process and ultraviolet ray process, it is effective to apply a pre-processing to either one surface of the sheet 34 to modify the characteristic of the sheet 34 in advance so that the sheet 34 which originally has low chemical affinity and the antistatic agent 68 may be finely and closely contacted with each other. In a case where such a corona discharge process is effected, not only the above-mentioned immersion method but also a method of coating the antistatic agent using a so-called coater may-be used.

In the above-mentioned examples, the method of the antistatic process for the sheet 34 has been described. The present invention is not limited to this but may also be applied to the sheet 36 interposed between the upper half 10 and the takeup hub 26.

A magnetic tape cassette in which a magnetic tape takeup hub is improved in order to adjust the running position of the magnetic tape will now be described.

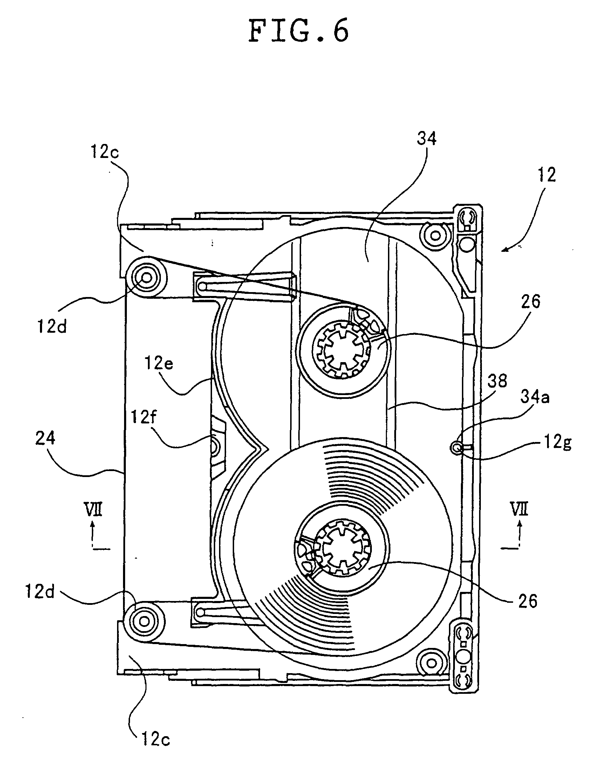

Fig. 6 is a plan view showing a state in which the sheet 34 and the magnetic tape 24 wound around a pair of takeup hubs 26, 26 are assembled into the lower half 12. As shown in Fig. 6, the magnetic tape is guided by ribs 12d, 12d to be exposed to the front side of the cassette (left side of Fig.6).

Further, although not shown, the sheet 36 and the upper half 10 are assembled in combination above this structure. Fig. 7 shows a partial cross-sectional view of the entire magnetic tape cassette thus assembled taken along the line VII-VII of the lower half 12. In Fig. 7, the sheets 34, 36 are indicated by dotted lines and the magnetic tape 24 is indicated by the two-dot dashed lines.

As shown in Fig. 7, the takeup hubs 26 around which the magnetic tape 24 is would are accommodated between the upper half 10 and the lower half 12 coupled with each other in a lid-alignment manner. Further, a transparent window 11 through which the state of the magnetic tape 24 may be observed from the outside is provided in the upper half 10. A ring-like lib 11a for holding the takeup hub is provided in the window 11. Then, the takeup hub 26 is disposed such that a lower portion thereof is accommodated in a takeup hub accommodating portion 12h of the lower half 12 and simultaneously, the gear 30 provided on the upper portion of the takeup hub 26 is accommodated within the link-like rib 11a of the above-mentioned upper half 10.

As shown in Fig. 7, in this embodiment, the rib 28b is provided on a bottom surface of the tape takeup ring 28 of the takeup hub 26, facing the bottom surface 12a of the lower half 12. The cross-sectional shape of the rib 28b may be a circular shape or an elliptical shape with a rounded portion like this, or a rectangular, a box or trapezoidal shape.

The rib 28b is provided so that the rib 28b is brought into contact with the bottom surface 12a of the lower half 12 through the sheet 34. Thus, the lower portion of the takeup hub 26 is not brought into contact with the takeup hub accommodating portion 12h around the reel shaft insertion hole 12b of the lower half 12. The height of the takeup hub 26 is adjusted to ensure smooth rotation to eliminate the fear of contact and wear of the resins.

Further, as shown in Fig. 7, the formed portion 38 provided in the sheet 34 indicated by the dotted line supports the magnetic tape 24 wound around the takeup hub 26 from below and limits the height of the magnetic tape 24.

Thus, the rib 28b is provided on the takeup hub 26 and the sheet 34 having the formed portion 38 is interposed thereby suitably limiting the running height of the magnetic tape 24 to realize smooth running of the tape.

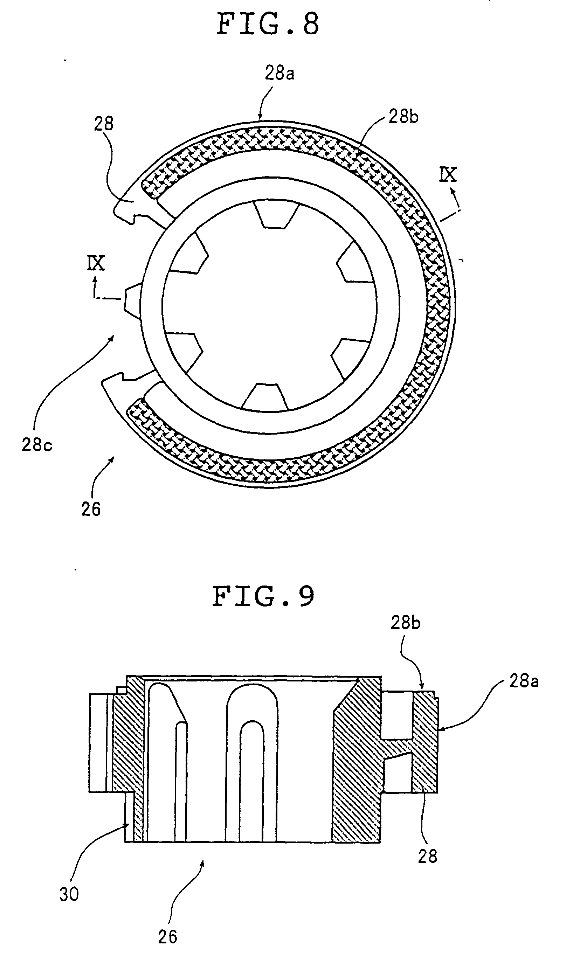

Fig. 8 is a schematic plan view of the takeup hub 26 as viewed from the side of the lower half (but the section of the rib 28b is shown as a rectangular shape). Further, the cross-sectional view taken along the line IX-IX in Fig. 8 is shown in Fig. 9. In Fig. 8, a small piece 32 for fixing the end of the magnetic tape is omitted. The tape takeup ring 28 is intermittently formed for this portion to form a space 28c.

The rib 28b is provided continuously on the bottom surface of the tape takeup ring 28 on a concentric circle with a center of the takeup hub 26. It may also be discretely provided at a suitable interval. Further, as shown in the section in Fig. 9, the sectional shape of the rib 28b is not particularly limited, and may be a rectangular shape or a shape with roundness R as above-mentioned or a spherical shape where the rib is discretely provided at a predetermined interval.

Further, the rib (projection) for positional limitation may be provided on the side of the lower half 12 other than the side of the takeup hub 26. However, if the rib is to be provided on the side of the lower half, since problems in cooling the entire structure in molding or various other problems in terms of the design have to be considered, it is preferable to provide the rib on the takeup hub side.

When the rib is provided on the side of the takeup hub, the setting and adjustment of the height are easy and the dimensional accuracy is also enhanced with ease. Further, when the height is changed, if the rib is provided on the side of the takeup hub, the shape of the molds may be made simple so as a nest easily. There is also an advantage that the machining is easy.

Additionally, the drive for accommodating the magnetic tape cassette on the deck side is not only of an upright type such that a side surface is abutted on a plane but also of a lay-down type such that a bottom surface is abutted on a plane. In this case, the lower surface side can not always be the reference for the positional limitation. In order to prevent the takeup hub from moving upwardly (toward the upper half) too much, it is necessary to effect the positional limitation not only on the side of the lower half but also on that of the upper half.

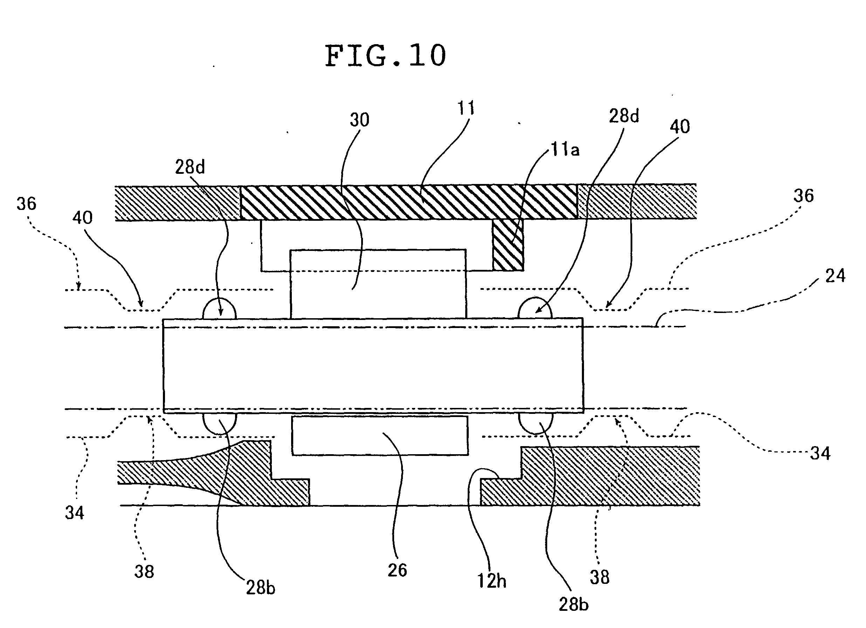

Therefore, as shown in Fig. 10, a rib 28d substantially as same as the above-mentioned rib 28b is also provided on the upper portion of the tape takeup ring 28 of the takeup hub 26 and is brought into contact with the lower surface of a ring-like rib 11a provided on the window 11 of the upper half 10 by way of the sheet 36. In this case, it is also possible to suitably perform the positional limitation of the takeup hub.

Further, in this case, it is not practical to provide a rib (convex portion) for positional limitation on the ring-like rib 11a of the above-mentioned upper half 10 to enhance the height of the ring-like rib 11a because of the problems such as stick in cavity in molding and the necessity of transparency for the window. Further, since it is necessary to use resin material such as AS, PS or the like, it is not practical also in consideration of the mechanical strength.

As above-mentioned, according to the present embodiment, the rib is provided on the takeup hub, so that the positional limitation of the height of the takeup hub may readily be performed thereby suitably adjusting the running height of the magnetic tape and ensuring smooth running of the magnetic tape.

Further, a predetermined antistatic process is applied to the sheet so that the amount of the antistatic agent may be reduced without degrading the antistatic effect and the secondary faults due to excessive amount of the antistatic agent may be prevented.

The magnetic tape cassette according to the second aspect of the present invention and the antistatic method of a sheet used in the same is constructed basically as above-mentioned.

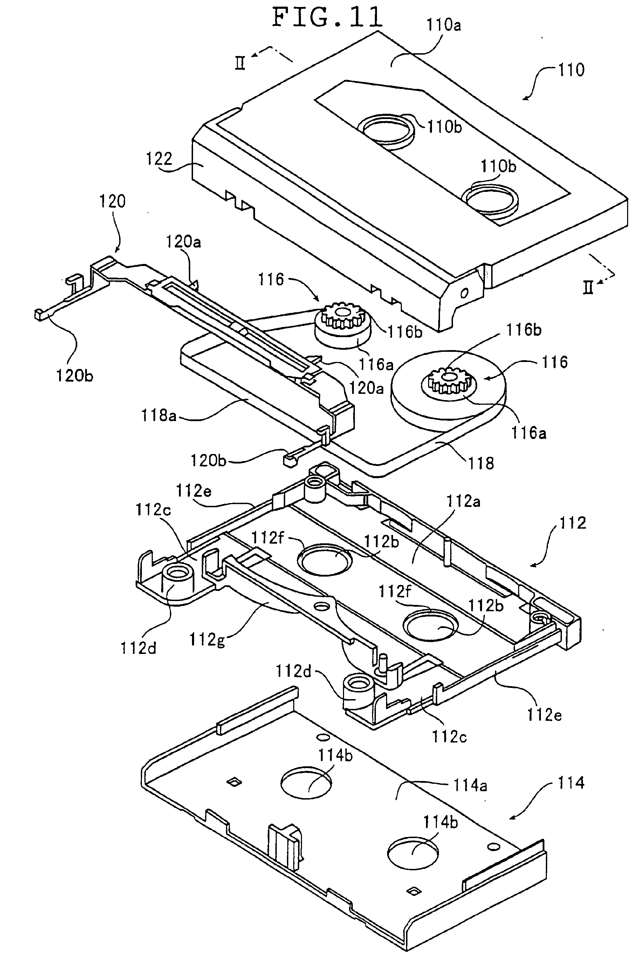

A magnetic tape cassette according to a third aspect of the present invention will be described in detail with reference to Figs. 11 to 16.

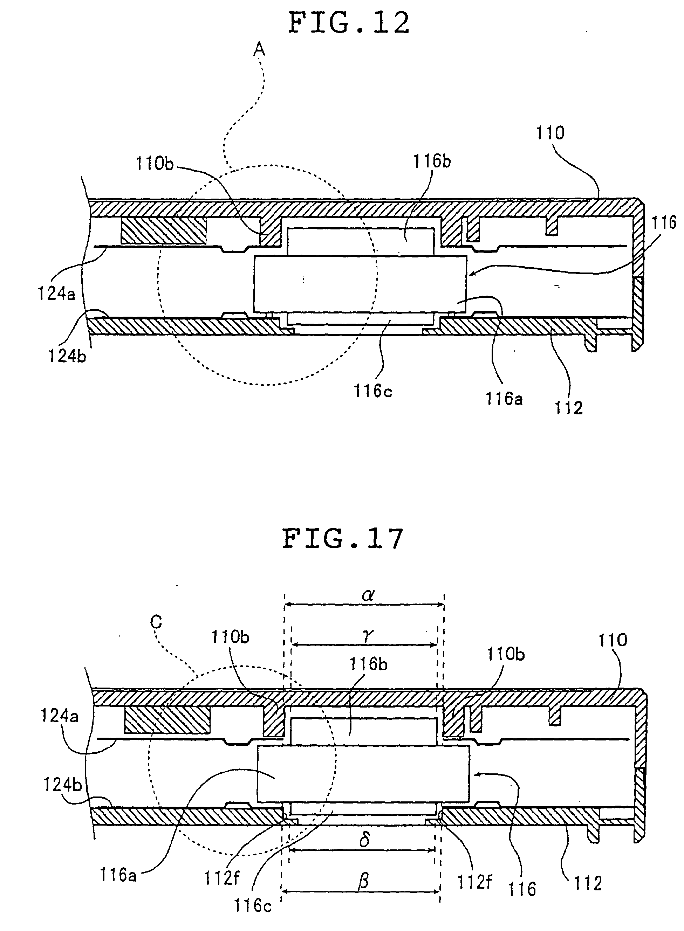

Fig. 11 is an exploded schematic perspective view showing a structure of a two-reel type magnetic tape cassette in accordance with one embodiment of the magnetic tape cassette in accordance with the third aspect of the present invention. Fig. 12 is a partial sectional view taken along the line II-II of the entire magnetic tape cassette shown in Fig. 11 except for only the takeup hubs, and which includes only one takeup hub.

As shown in Fig. 11, the magnetic tape cassette according to the present invention is mainly constituted by an upper half 110 and a lower half 112 coupled together in a lid-alignment manner to constitute a casing which is a casing (cassette casing) of the magnetic tape, a slider 114 provided in contact with a bottom surface of the lower half 112 from outside and mounted so as to be slidable back and forth and the magnetic tape 118 wound around takeup hubs 116 at both ends.

The magnetic tape cassette according to the present invention is constituted by coupling the upper half and the lower half in a lid-alignment manner. Any magnetic tape may be used, as far as the magnetic tape is wound within the interior thereof and takeup hubs having no flanges at the upper and lower ends of the reels are rotatably accommodated therein. For example, it is possible to use a magnetic tape cassette such as a DDS, a DAT or the like or a single reel type magnetic tape cassette.

In the magnetic tape cassette, both ends of the elongated strip-shaped magnetic tape 118 are fixed to winding cores 116a, 116a of the pair of takeup hubs 116, 116, the magnetic tape 118 is wound around the winding cores 116a, 116a from both ends, respectively, the pair of takeup hubs 116, 116 around which this magnetic tape 118 is wound are accommodated rotatably in the cassette casing obtained by coupling the upper half 110 and the lower half 112 in a lid-alignment manner, the magnetic tape 118 is tensioned through a predetermined path between the pair of takeup hubs 116, 116, and only the projection 118a of the magnetic tape corresponding to the position of the magnetic head of the recording/reproducing apparatus (not shown) may be exposed for the outside.

In order to prevent the magnetic layer surface of the magnetic tape 118a of the tensioned and projection which may be exposed from this cassette casing from being touched with fingers and/or to prevent the dust from sticking thereto, a front lid 122 pivoted about a pin is provided on the upper half 110 so as to swing between a closing position for covering the magnetic tape 118a at the projected and tension portion and an opening position for exposing it at that portion.

The cassette casing is formed by coupling the upper half 110 and the lower half 112 formed in rectangular shapes in a lid-alignment manner, and as above-mentioned, the pair of takeup hubs 116, 116 around which the magnetic tape 118 is wound is rotatably accommodated, and as described in detail later, various structures for holding the magnetic tape 118 and attaining predetermined functions are accommodated and held.

As shown in Fig. 12, provided on the takeup hub 116 are the winding core 116a around which the magnetic tape 118 is wound, an upper end 116b projecting from a top end face of the winding core 116a, which is formed in a gear-like shape, smaller in diameter than the winding core 116a and coaxial with the winding core 116a, and a lower end 116c formed on the lower end face of the winding core 116a to project therefrom, which is smaller in diameter than the winding core 116a and coaxial with the winding core 116a. Sheets 124a and 124b interposed between the upper half 110 and the lower half 112 are disposed at both sides of the magnetic tape 118 wound around the winding core 116a of such a takeup hub 116. The top end 116b of the takeup hub 116 is formed into the gear teeth, the gear teeth (not shown) are meshed with a brake piece 120a of the brake member 120 assembled into the upper half 110 thereby preventing the rotation of the magnetic tape 118 in the loosening direction and to prevent the loosening of the magnetic tape 118 due to the vibration or shock or the like in delivery or handing of the magnetic tape cassette when it is not in use, a pair of brake pieces 120a, 120a, respectively are engaged with the teeth of the gears of the upper ends 116b, 116b of the associated takeup hubs 116, 116, and the brake member 120 is biased rearward toward the takeup hub 116 by the brake spring (not shown) provided in the upper half 110.

When the magnetic tape cassette is not used, the brake member 120 is in the brake position where the brake piece 120a is engaged with the teeth of the gear of the upper end 116b to stop the rotation of the takeup hub 116 by the biasing force of the brake spring, and when the cassette is loaded onto the recording/reproducing apparatus, the front lid 122 is rotated by the recording/reproducing apparatus, the elongated brake arm 120b extending forwardly from both the right and left ends of the brake member 120 and provided so as to engage with the front lid 122 is drawn forwardly, the brake piece 120a is separated from the upper end 116b, whereby the brake arm 120 is moved to the release position where the takeup hub 116 may rotate.

The upper half 110 has a ceiling surface 110a in the form of a rectangular shape. A pair of hub holders 110b, 110b for supporting the takeup hubs 116 rotatably are erected downwardly to the ceiling surface 110a.

The lower half 112 has a bottom surface 112a in the form of a rectangular shape. This bottom surface 112a has reel shaft insertion holes 112b, 112b into which the reel shaft for drivingly rotating the takeup hubs 116 (not shown) are inserted from the recording/reproducing apparatus when the magnetic tape cassette is loaded onto the recording/reproducing apparatus and hub holders 112f, 112f forming walls for these reel shaft insertion holes 112b, 112b and for rotatably supporting the takeup hubs 116. Furthermore, the bottom surface 112a of the lower half 112 has projections 112c, 112c extending forwardly from both the right and left ends thereof. Cylindrical tape guides 112d, 112d for guiding the magnetic tape 118 tensioned between the pair of takeup hubs 116, 116 through a predetermined path to the front face of the cassette casing are formed in an upright state on the bottom surface 112a on the right and left projections 112c, 112c. The space between these right and left projections 112c, 112c is a space where the bottom surface 112a of the lower half 112 is not formed, thereby forming an opening of the cassette casing. The opening of this cassette casing is a space into which the tape loading device (not shown) provided in the recording/reproducing apparatus enter when the magnetic tape cassette is loaded onto the recording/reproducing apparatus.

The slider 114 has a thin planar bottom surface provided in contact with the bottom surface 112a of the lower half 112 from below and a pair of reel shaft insertion holes 114b, 114b provided in this bottom surface 114a and is guided along the side walls 112e of the lower half 112 to be slidable back and forth. When the slider is biased and moved forwardly by the slider spring (not shown), the reel shaft insertion holes 112b, 112b and the cassette casing opening provided in the lower half 112 in the bottom surface 114a are closed to prevent entering of dust, and when the slider is moved backwardly, the opening of the cassette casing is opened and the positions of the reel shaft insertion holes 112b, 112b provided in the bottom surface 112a of the lower half 112 become coincident with the positions of the reel insertion holes 114b, 114b provided in the bottom surface 114a of the slider 114, whereby the tape loading device of the recording/reproducing apparatus and the reel shafts can be inserted thereinto.

When the magnetic tape cassette is loaded onto the recording/reproducing apparatus, interlocking with the operation of loading the magnetic tape cassette into the recording/reproducing apparatus, the rib provided on the front face of the slider 114 is pressed and automatically moved backwardly, the opening formed between the right and left projections 112c, 112c of the lower half 112 is released, so that the tape loading device of the recording/reproducing apparatus may be inserted thereinto, and the positions of the reel shaft insertion holes 112b, 112b of the lower half 112 become coincident with the positions of the reel shaft insertion holes 114b, 114b of the slider 114, so that the reel shafts of the recording/reproducing apparatus can be inserted.

The reel shafts provided in the recording/reproducing apparatus are insertingly coupled by the reel shaft coupling holes for drivingly rotating the respective takeup hubs 116 provided in the lower ends 116c of the takeup hubs 116. As above-mentioned, these reel shafts are inserted into the reel shaft coupling holes of the takeup hub 116 by being penetrated through the reel shaft insertion holes 114b, 112b provided in the slider 114 and the lower half 112, respectively, and coupled with the takeup hubs 116 to rotate them. The magnetic tape 118 is wound around one of the takeup hubs whereby the magnetic tape 118 fed out of the other takeup hub is moved in contact with the magnetic head of the recording/reproducing apparatus at the portion 118a where the magnetic tape is tensioned to thereby record information onto the magnetic tape or to reproduce information from the magnetic tape.

Next, the control of the uppermost limit position of the takeup hub 116, which is the feature of the present invention, will now be described in detail on the basis of the drawings.

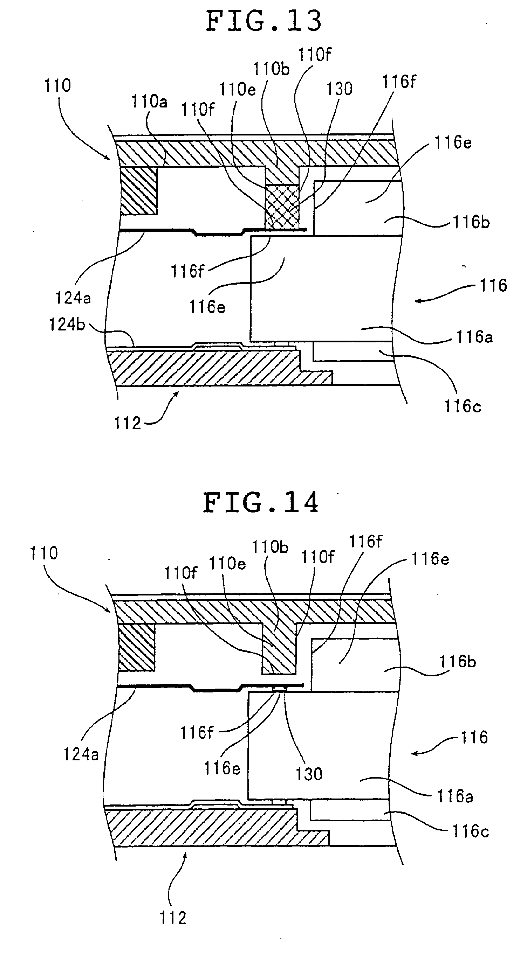

Figs. 13 to 16 are partially enlarged view of the portion indicated by B in the cross-section of the magnetic tape cassette of Fig. 12.

In the magnetic tape cassette according to a first embodiment of the third aspect of the invention, at least one contact of the upper half 110 and the takeup hub 116 which are in contact with each other is made of elastic material.

The magnetic tape cassette in accordance with the first embodiment of this aspect will now be described in detail with reference to Figs. 13 to 15.

In this aspect, "the contact of the upper half and the takeup hub which are in contact with each other" means those parts of the upper half and the takeup hub 116 in which the upper half 110 and the takeup hub 116 are first brought into contact with each other or the upper half 110 and the takeup hub 116 are brought into contact with each other through a sheet 124a provided on an inner surface of the upper half 110 in the casing, when the magnetic tape cassette is loaded with the lower half 112 being laid below, only the takeup hub 116 is moved upwardly from the position where the takeup hub 116 is originally located without moving the upper and lower halves 110 and 112.

Further, in this aspect, the upper half 110 having a window formed in a portion thereof is included in the upper half 110. Of course, this includes the casing where the takeup hub 116 and the window are brought into contact with each other.

Further, a part in which the takeup hub 116 and the upper half 110 are brought into contact with each other when the takeup hub 116 is moved in the horizontal direction within the upper and lower halves 110 and 112 is included in this contact.

In a case where the takeup hub 116 and the upper half 110 are brought into contact with each other in the manner described above, the surface of the takeup hub 116 and that of the upper half 110 which are brought into contact with each other are referred to as the contact surface.

Namely, in Figs. 13 and 14, the contact 110e on the side of the upper half 110 means the hub holder 110b, and the contact 116e on the side of the takeup hub 116 means the top of the winding core 116a or the projection 116d provided on the top of the winding core 116a and the outer circumference of the top end 116b formed in a cylindrical shape. Further, the contact surface 110f on the side of the upper half 110 means the lower end surface of the hub holder 110b and the inner circumferential surface of the hub holder 110b formed in the cylindrical shape, and the contact surface 116f on the side of the takeup hub 116 means the top end face of the winding core 116a or the top end face of the projection 116d provided on the top of the winding core 116a and the outer circumference of the top end 116b.

In Fig. 13, the elastic member 130 is provided so as to include the contact surface 110f in a part of the hub holder 110b which is the contact 110e on the side of the upper half 110. However, the elastic member 130 may also be provided on the entirety of the hub holder 110b or may even include the ceiling surface 110a of the upper half 110 and the outer surface of the upper half 110.

In Fig. 14, the elastic member 130 is provided so as to further include the contact surface 116f in the projection 116d which is the contact 116e on the side of the takeup hub 116. However, the elastic member 130 may alternatively be provided in a part of the projection 116d or may even reach the winding core 116a, or may be provided only on the winding core 116a. Further, in a case where the projection 116d is not provided on the winding core 116a, the elastic member 130 may be provided on the winding core 116a so as to include the top end face of the winding core 116a which is the contact surface 116f on the side of the takeup hub 116.

Further, as shown in Figs. 13 and 14, the sheet 124 may be interposed between the contact surfaces 110f and 116f.

It is preferable that the elastic member 130 is provided such that when the magnetic tape cassette is laid with the lower half 112 being laid downward, the clearance between the contact surfaces 110f and 116f is at 0.5 millimeters or less under the state that the takeup hub 116 is in the lower limit position, such as shown in Fig. 13.

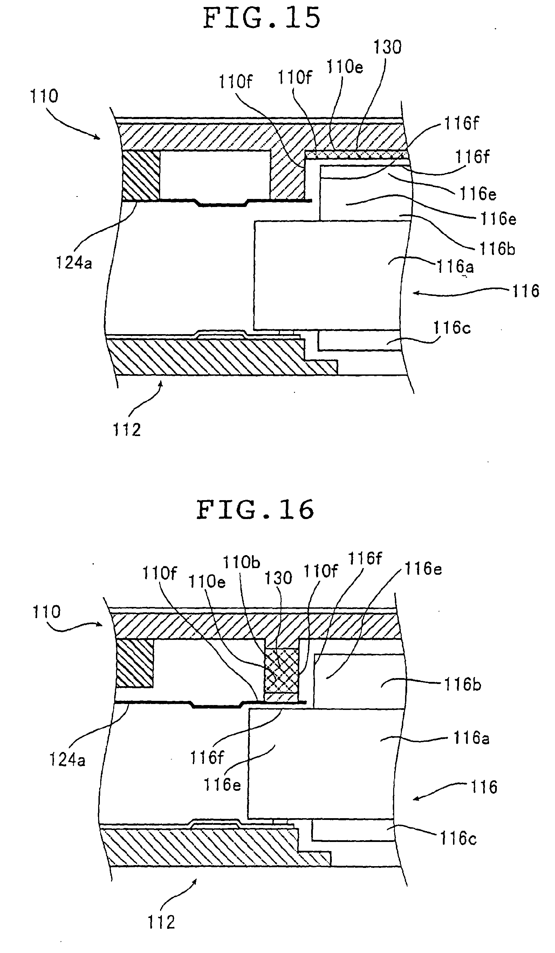

In Fig. 15, the contact 110e on the side of the upper half 110 means the inner circumference of the hub holder 110b and a part of the upper half 110 surrounded by the hub holder 110b which is formed in a cylindrical shape, and the contact 116e on the side of the takeup hub 116 means the outer circumference of the top end 116b and the top of the top end 116b. Further, the contact surface 110f on the side of the upper half 110 means a part of the ceiling surface 110a surrounded by the hub holder 110b and the inner circumferential surface of the hub holder 110b which is formed in a cylindrical shape, and the contact surface 116f on the side of the takeup hub 116 means the top end face of the top end 116b and the outer circumference of the top end 116b.

In Fig. 15, the elastic member 130 is provided in the contact 110e on the side of the upper half 110, i.e., a part of the upper half 110 surrounded by the hub holder 110b, such that it includes the contact surface 110f. The elastic member 130 is not limited to the part of the upper half 110 surrounded by the hub holder 110b but may include the whole of the upper half 110.

Further, the elastic member 130 may be provided in the contact potion 116e on the side of the takeup hub 116, i.e., in the top of the upper end 116b such that it includes the contact surface 116f. In this case, the elastic member 130 may extend not only to the upper portion of the top end 116b but also the center of the top end 116b, the winding core 110a and the lower 116c as far as it does not interfere with the function of engaging the teeth (not shown) of the gear of the top end 116b with the brake piece 120a of the brake member 120 assembled into the upper half 110 to restrict the rotation in the loosening direction of the magnetic tape 118 against winding-up as above-mentioned.

It is preferable that the elastic member 130 is provided such that the clearance between the contact surfaces 110f and 116f is 0.5 millimeters or less under the condition that the takeup hub 116 is in the lower limit position.

A magnetic tape cassette in accordance with a second embodiment of the third aspect of the present invention will be described with reference to Fig. 16.

In the magnetic tape cassette according to the second embodiment of this aspect, at least one contact of the takeup hub 116 and the upper half 110 which are in contact with each other is constituted by a member into which an elastic member is inserted.

Additionally, the meaning of "the contact of the takeup hub and the upper half which are in contact with each other" and the "contact" is the same as that described in conjunction with the first embodiment of this aspect. The upper half 110 formed with a window in a part thereof is included in the upper half 110 as in the first embodiment of this aspect.

As shown in Fig. 16, the elastic member 130 is provided in the contact 110e so as not to include the contact surface 110f. It should be noted that the elastic member 130 is provided in the same manner as in the first embodiment except for the point that the contact surface 110f is not included. Namely, it is sufficient to provide the elastic member 130 on at least one of the contact 116e on the side of the takeup hub 116 and the contact 110e on the side of the upper half 110 so as not to include the contact surface 110f or 116f. The elastic member 130 is provided in the same manner as in the first embodiment except for the point that the elastic member is provided so as not to include the contact surface 110f or 116f.

It should be noted here that it is preferable that the portion including the contact surface 110f or the contact surface 116f is made of the same material as that of the upper half 110 or the takeup hub 116 so that the friction between the contact surfaces 110f and 116f of the upper half 110 and the takeup hub 116 or the friction between the contact surfaces 110f and 116f by way of the sheet 124a may be the minimum.

Further, under the condition that the takeup hub 116 is in the lowermost limit position, it is preferable that the clearance between the contact surfaces 110f and 116f is 0.5 millimeters or less, more preferably 0.2 millimeters or less, and most preferably, the contact surfaces 110f and 116f are brought into contact with each other or the contact surface 110f and 116f are biased toward each other by the elastic member 130 inserted into the contacts 110f and 116f thereby making it possible to make the clearance into zero.

In the magnetic tape cassette in accordance with the first and second embodiments of this aspect, in order to limit the clearance in the right and left direction of the takeup hub 116, the contact 110e which is the inner circumference of the hub holder 116b may be formed by elastic material or may be formed by a member into which the elastic material is inserted.

In the magnetic tape cassette in accordance with the first and second embodiments of this aspect, any material may be used as the elastic member 130 if it has elasticity. For example, it is preferable to use urethane system such as polyurethane, styrene system such as foamed polystyrene, thermoplastic elastmer such as polyester system, fluorine system, olefin system, polyamide system, or the like.

It is preferable that the elastic member 130 has a spring force of about 1 to 10 gf in view of effectively protecting the magnetic tape 118 and the takeup hub 116 from the shock due to saccadic movement (rattle) between the takeup hub 116 and the upper and lower halves 110 and 112, and further in the second embodiment of this aspect, in view of setting suitable biasing force between the upper half 110 and the takeup hub 116.

In the magnetic tape cassette in accordance with the first embodiment of this aspect, as far as at least one of the contact 110e and 116e is constituted by the elastic member 130, there is no limit as to the manner in which the elastic member 130 is provided and the contact 110e or 116e per se may be formed by the elastic member 130. Further, the upper half 110 or the takeup hub 116 may be molded to include the elastic member 130 in molding. Further, the elastic member 130 may be bonded with adhesives or the like to the upper half 110 or the takeup hub 116 to form the contact 110e or 116e. Further, the elastic member 130 may be engaged with the upper half 110 or the takeup hub 116 to form the contact 110e or 116e.

Likewise, in the magnetic tape cassette in accordance with the second embodiment of this aspect, if at least one of the contact 110e and 116e is constituted by the elastic member 130, there is no limit as to the manner in which the elastic member 130 is interposed and the contact 110e or 116e per se may be formed by the elastic member 130. Further, the member including the contact surface 110f or 116f may be bonded with adhesives or the like. Further, the upper half 110 or the takeup hub 116 may be molded to include the elastic member 130 in molding. Further, the elastic member 130 may be bonded using adhesives or the like to the upper half 110 or the takeup hub 116 to form the contact 110e or 116e. Further, the elastic member 130 may be engaged with the upper half 110 or the takeup hub 116 to form the contact 110e or 116e.

In the magnetic tape cassette in accordance with the first and second embodiments of a third aspect of the present invention, when the magnetic tape cassette is used, stored or transported, even if the takeup hub 116 is in contact with the upper half 110, it is possible to moderate the shock by the elastic member 130 provided on at least one of the contacts of the takeup hub 116 and the upper half 110.

In the magnetic tape cassette in accordance with the second embodiment of the third aspect of the present invention, the takeup hub 116 and the upper hub 110 are biased toward each other so that the position of the takeup hub 116 becomes stable and thereby the height of the magnetic tape 118 becomes stable.

The magnetic tape cassette in accordance with the third aspect of the present invention is constructed basically as above-mentioned.

A magnetic tape cassette in accordance with a fourth aspect of the present invention will now be described in detail with reference to Fig. 11 and Figs. 17 to 19.

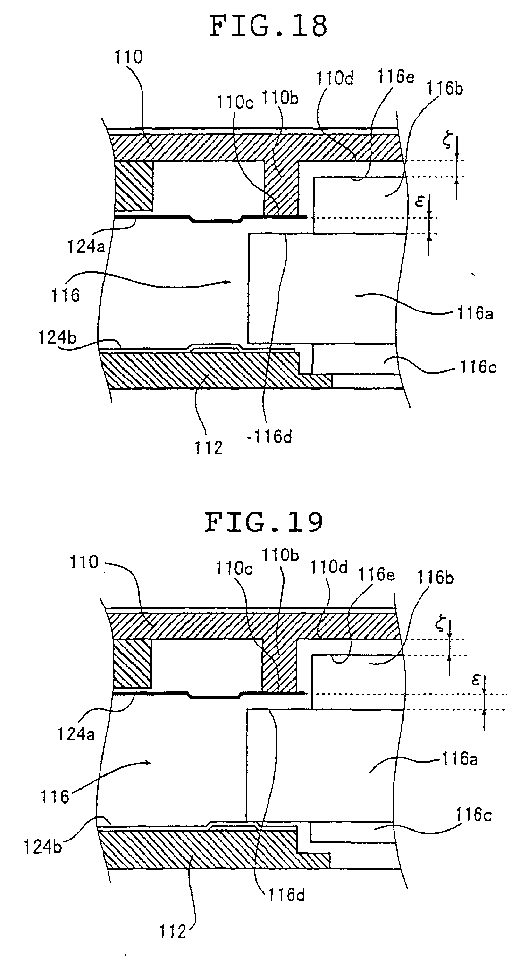

Fig. 17 is a partial sectional view of an overall magnetic tape cassette shown in Fig. 11 taken along the line II-II, according to another embodiment and a view illustrative of the magnetic tape cassette in accordance with the first embodiment of the fourth aspect of the present invention.

Fig. 17 is a partial cross-sectional view of the twin-reel type overall magnetic tape cassette shown in Fig. 11 taken along the line II-II except for the takeup hub and a view illustrative of the magnetic tape cassette of another embodiment according to a first embodiment of the fourth aspect of the present invention in which only one takeup hub is included.

First, referring to Fig. 17, clearance provided in the vertical and horizontal directions between the takeup hub 116 and the upper and lower halves 110 and 112 will be described in detail.

In this aspect, clearance in the horizontal direction of the takeup hub means a difference α-γ between the inner diameter α of the hub holder 110b of the upper half 110 and the outer diameter γ of the top end 116b of the takeup hub 116, and a difference (β-δ) between the inner diameter β of the hub holder 112f of the lower half 112 and the outer diameter δ of the lower end 116c of the takeup hub 116, in more detail, a difference (α-γ) between the inner diameter α of the cylindrical hub holder 116b formed in an upright state in the upper half 110 and the outer diameter γ of the cylindrical upper end 116b provided at the top end of the takeup hub 116 and a difference β-δ between the inner diameter β of the hub holder 112f forming the wall of the reel shaft insertion hole 112b provided in the lower half 112 and the outer diameter δ of the cylindrical lower portion 116c provided at the lower end side of the takeup hub 116.

Namely, in Fig. 17, the difference α-γ and the difference (β-δ) indicate the clearances in the horizontal direction between the takeup hub 116 and the upper and lower halves 110 and 112.

In this aspect, it is necessary that the clearances in the horizontal direction of the takeup hub 116, i.e., both the difference (α-γ) and the difference (β-δ) are less than 1 millimeter.

Further, in this aspect, the upper half 110 of course includes the upper half 110 in which a window is formed in a part thereof, and a case where the hub holder 110b is a part of the window is also included.

The clearances in the horizontal direction between the upper and lower halves 110 and 112 and the takeup hub 116 adopted in the magnetic tape cassette according to this aspect are set more restrictively in comparison with the clearances in the horizontal direction between the upper and lower halves and the takeup hub adopted in the design of the conventional magnetic tape cassette, whereby the playing movement in the horizontal direction of the takeup hub 116 is made smaller and correspondingly, more amount of the magnetic tape 118 needs to be wound around the takeup hub 116.

Here, it is preferable that the width of the magnetic tape 118 is 6.5 millimeters or less and more preferably 4 millimeters or less. Further, it is preferable that the thickness of the magnetic tape 118 is 7 micrometers or less, and more preferably 4 micrometers or more and 7 micrometers or less. When the magnetic tape cassette in accordance with this aspect is applied to a magnetic tape having such a narrow width and small thickness, it can exhibit enhanced effect.

A magnetic tape cassette in accordance with a second embodiment of the fourth aspect of the present invention will now be described. Here, since the magnetic tape cassette in accordance with the second embodiment of this aspect relates to the clearance in the vertical direction of the takeup hub, this will be described with reference to Figs. 18 and 19 which show enlarged views of the portion indicated by C in Fig. 17.

In this aspect, the clearance in the vertical direction of the takeup hub means a gap ε generated between the upper half 110 and the top end face 116d of the winding core 116a of the takeup hub 116 when the lower half 112 is laid in the below and a gap ζ generated between the upper half 110 and the top end face 116e of the upper end 116b.

More specifically, the clearance means a gap ε generated between the lower end face 110c of the hub holder 110b erected tothe upper half 110 and the top end face 116d of the winding core 116a of the takeup hub 116 when the lower half 112 of the magnetic tape cassette is disposed downward and the a gap ζ generated between the lower end face 110d of the upper half 110 and the top end face 116e of the top end 116b of the takeup hub 116.

As shown in Figs. 18 and 19, since the sheet 124a is normally provided inside the upper half 110, according to the present invention, the gap ε includes the gap ε between the top end face 116d of the winding core 116a and the sheet 124a provided inside the upper half 110.

Further, in this aspect, the upper half 110 of course includes the upper half 110 in which a window is formed in a part thereof, and a case where the hub holder 110b is a part of the window is also included.

In this aspect, it is necessary that the clearance in the vertical direction of the takeup hub, i.e., either one of the gap ε and the gap ζ is not greater than 0.5 millimeters. It is preferable to bring the upper half 110 and the takeup hub 116 into contact with each other through the sheet 124a in order not to bring the resin of the upper half 110 and the resin of the takeup hub 116 into direct contact with each other to cause peeling of the resin and hence a running defect of the magnetic tape 118. It is preferable that the gap ε between the lower end 110c of the hub holder 110b erected to the upper half 110 and the top end face 116d of the winding core 116a is narrower than the gap ζ between the lower end face 110d of the upper half 110 and the top end face 116e of the top end 116b of the takeup hub 116.

Here, also in the second embodiment of this aspect, for the same reason as explained in relation to the magnetic tape cassette in accordance with the first embodiment of this aspect, it is preferable that the width of the magnetic tape 118 is 6.5 millimeters or less and further preferably 4 millimeter or less. Further, it is preferable that the thickness of the magnetic tape 118 is 7 micrometers or less, and more preferably 4 micrometers or more and 7 micrometers or less.

Additionally, as a method for determining a limit position in the downward direction of the takeup hub 116, i.e., the lowermost limit position thereof, as shown in Fig. 18, it is possible to adopt a method of bringing the lower half 112 and the lower end face of the lower end 116c into contact with each other or a method of bringing the lower half 112 and the lower end face of the winding core 116a of the takeup hub 116 into contact with each other or the like.

Further, as shown in Fig. 19, the winding core 116a or the lowermost end 116c and the sheet 124b provided on the inner side of the lower half 112 may be brought into contact with each other to determine the lower limit position of the takeup hub 116.

The magnetic tape cassette in accordance with the fourth aspect of the present invention is constructed basically as above-mentioned.

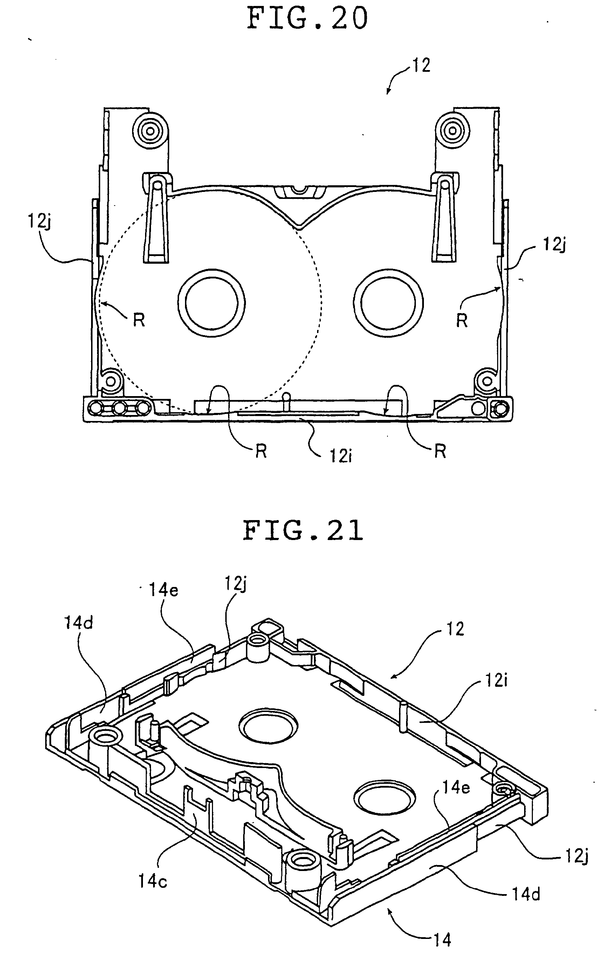

A magnetic tape cassette in accordance with a fifth aspect of the present invention will be described with reference to Figs. 20 to 25C in detail.

In a magnetic tape cassette constituted by upper and lower halves and a slider, as above-mentioned, there is a strong demand to obtain a larger storage capacity by enlarging the winding area of the magnetic tape to accommodate therein a longer magnetic tape without increasing the size of the cassette. Now, Further in the magnetic tape cassette shown in Fig. 1, such an attempt is made.

Fig. 20 is a plan view of the lower half 12 of the magnetic tape cassette shown in Fig. 1. As shown in the same drawing, the reduced thickened portion R having a round portion which conforms to the outermost circumference of the magnetic tape is formed in both right and left side walls 12j, 12j and the rear side wall 12i of the lower half 12 so that the magnetic tape wound around the takeup hub is not contacted therewith or a larger amount of the magnetic tape may be wound. Thus, the winding area of the magnetic tape is increased as much as possible thereby increasing the storage capacity.

Further, the state in which the slider 14 is assembled with the lower half 12 is shown in a perspective view of Fig. 21. The right and left side walls 14d, 14d of the slider 14 are brought into contact with the right and left side walls 12j, 12j of the lower half 12 from outside and the lower surfaces of the engagement sliding portions 14e, 14e are brought into sliding contact with the top surface of the side walls 12j. Thus, the slider covers the bottom surface of the lower half from below and slides back and forth and simultaneously forms and fits with sliding surfaces between it and the side walls of the upper and lower halves. For this reason, the slider side walls are disposed in the outer side of the wall for dust proof of the lower half side walls, and the side walls of the upper half are disposed above and in the outer side thereof.

Further, the outermost circumference of the tape winding surface coincides with the concentric circle of the hub hole of the slider and the lower half. In the cassette side surface, the dimension therefrom to the lower half side wall is a limit point. It is impossible to wind the tape beyond that point. Therefore, as above-mentioned, in the conventional art, a reduced thickened portion having a round portion along the portion of the lower half side wall corresponding to the outermost circumference of the tape is formed to wind the tape as much as possible.

However, according to this method, there is a limit in the increase of the length of the receivable magnetic tape, and hence the increase of the storage capacity. Accordingly, the present inventors have conceived that by performing the protection of the magnetic tape against the dust using the slider, a part of both the right and left side walls, which limit the winding diameter of the magnetic tape, may be cut away to make it possible to accommodate a longer magnetic tape.

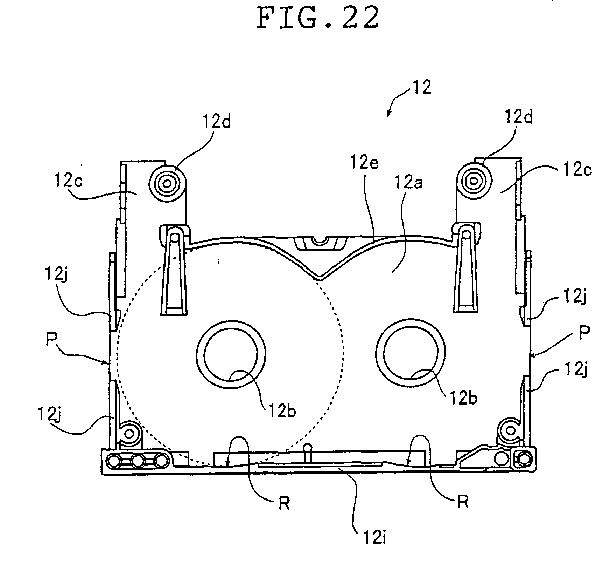

Fig. 22 is a plan view of one embodiment of a lower half of a magnetic tape cassette according to the present invention.

The lower half 12 has reel shaft insertion holes 12b, 12b on a rectangular bottom surface 12a, through which the reel shafts may be inserted into the cassette casing in use of the cassette. Both the right and left ends of the bottom surface 12a form projections (tape outlets) 12c, 12c extending forwardly. Cylindrical ribs 12d, 12d for guiding the magnetic tape are provided in the right and left projections 12c, 12c. The space between the right and left projections 12c, 12c is provided on the side of the recording/reproducing apparatus (deck) into which the magnetic tape cassette is to be loaded, that is, it is a space in which the tape loading device is embedded.

Further, a wall-like member 12e of two continuous divided sleeve-type ribs substantially formed in a V-shape is formed upright in the bottom surface 12a of the lower half 12. Side walls 12i and 12j, 12j are provided vertically on the bottom surface 12a on the rear side and both sides of the lower half 12, respectively. These side walls 12i, 12j are coupled in a lid-alignment manner with the like side walls provided on the upper half (not shown) to enhance the seal ability of the casing against dust proof and to secure the mechanical strength of the casing.

The magnetic tape wound around the takeup hubs is disposed in a region surrounded by the above-mentioned wall-like member 12e and the side walls 12i, 12j on the lower half 12. A dotted circle of Fig. 22 indicates a maximum winding diameter of the tape. The above-mentioned wall-like member 12e has a curvature in conformity with this. A reduced thickened portion R having a roundness in conformity with this is also formed in a portion of the side wall 12i of the rear end corresponding to the maximum winding diameter of the tape.

Here, the feature of this aspect is that the portions of the side walls 12j, 12j of both right and left ends of the lower half 12 corresponding to the tape maximum winding diameter, i.e., the portions indicated by reference character P shown in Fig.22 are cut away thereby increasing the amount of the tape which can be wound.

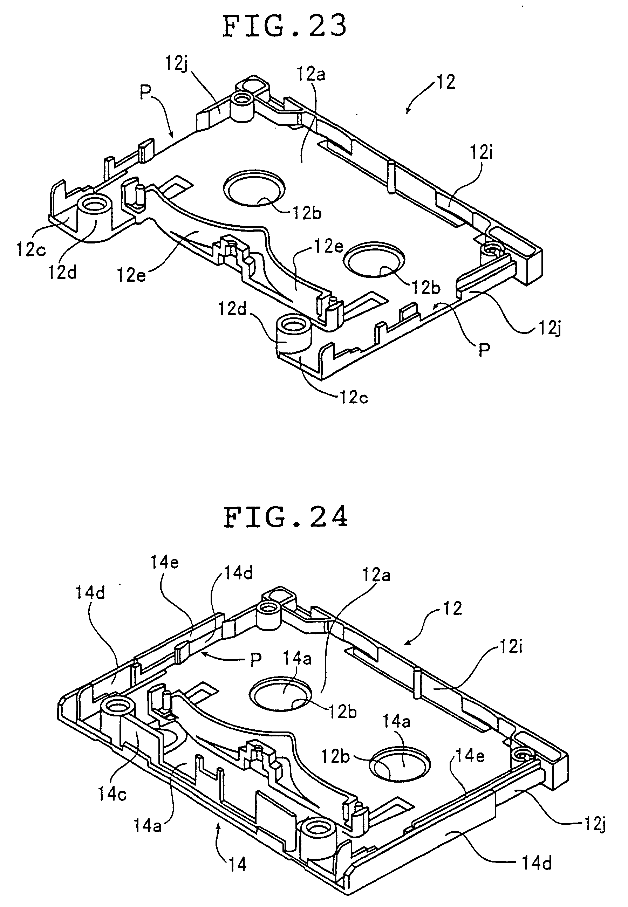

Fig. 23 is a perspective view of this lower half 12. As above-mentioned, the cutaways P are formed in substantially centers of the right and left side walls 12j, 12j of the lower half 12 corresponding to the tape maximum diameter. Accordingly, with the above configuration, a part of the winding tape is exposed from the cutaways P. Accordingly, the dust proof effect which has been realized by the side walls 12j of the lower half 12 is realized by the side walls of the slider.

Fig. 24 is a perspective view showing the state where the slider 14 is embedded into the lower half 12.

The slider 14 is slid back and forth of the cassette in contact with the bottom surface 12a of the lower half 12 from below. When the slider is in the forward position, as shown in Fig. 24, the space between the right and left projections 12c, 12c of the above-mentioned lower half 12 and the reel insertion holes 12b, 12b are closed for dust proof by the bottom surface 14a of the slider 14. Further, when the slider 14 is in the rearward position, the space between the right and left projections 12c, 12c of the above-mentioned lower half 12 is released, and the two holes provided in the bottom surface 14a of the slider 14 coincide with the reel shaft insertion holes 12b, 12b of the above-mentioned lower half 12. When the cassette is loaded on the deck, the slider 14 is automatically positioned rearward by the action of the device within the deck but when the cassette is not in use, the slider is located forwardly by the biasing force of the spring. A wall-like rib 14c is provided on the front side of the slider 14 for accommodating the biasing force of the spring.

Further, side walls 14d are erected normally to the bottom surface 14a on both right and left ends of the bottom surface 14a of the slider 14. A parallelepiped engagement sliding portion 14e provided in an upper end inner edge of each side wall 14d. The lower surface of the engagement sliding portion 14e engages and slidingly contacts with the top surface of each of the right and left side walls 12j, 12j of the lower half 12.

The cutaways P of the side walls 12j, 12j of the above-mentioned lower half 12 are protected by the side walls 14d, 14d of both right and left ends of this slider 14. In short, the dust proof walls can be formed by the side walls 14d, 14d of the slider 14.

The members such as the upper half, the brake member and the like are the same as those of the magnetic tape cassette shown in Fig. 1 except for the above-mentioned lower half 12 and the slider 14. Accordingly, the explanation therefor will be omitted.

Thus, according to this aspect, since a certain area of the side wall including the center points in each of the right and left side walls of the lower half, which corresponds to the outer circumference of the maximum tape winding diameter (i.e., reduced thickened portions formed with roundness in conformity with the outer circumference of the maximum tape winding diameter in the conventional art) is cut away and the dust proof walls are formed by the slider side walls, it is possible to form the winding diameter area which is substantially equal in size to that of the upper half in the lower half side. Therefore, it is possible to enlarge the tape winding diameter area without increasing the cassette size (in particular the size in the right and left directions of the cassette). As a result, it is possible to increase the amount of the tape that can be wound and to increase the storage capacity of the magnetic tape cassette.

Note that, although there is a possibility that the mechanical strength of the side walls 12j would be reduced due to the cutaway of the parts of the side walls 12j of the lower half 12, this drawback can be overcome by, for example, the following arrangements.

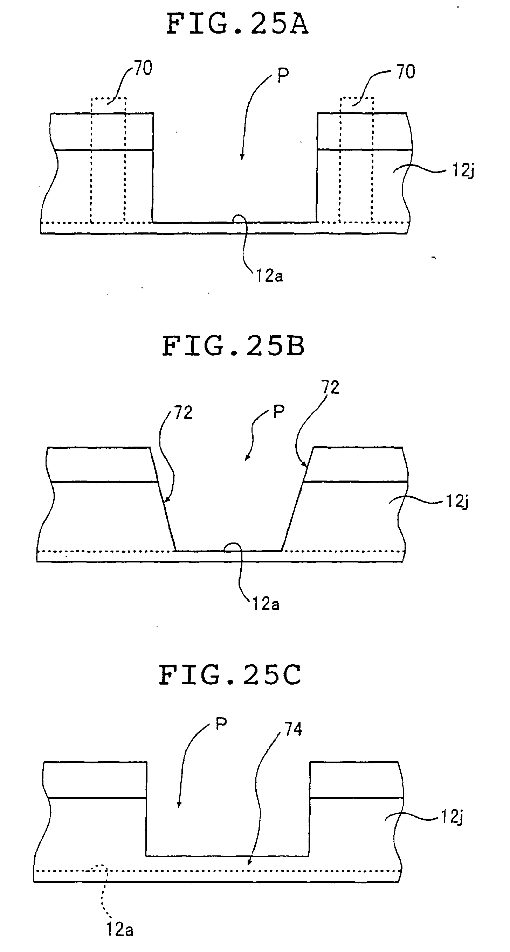

The examples are shown in Figs. 25A to 25C. Figs. 25A, 25B and 25C show these examples based on side views of the cutaway P of the side wall 12j of the lower half 12.

First, shown in Fig. 25A is one in which reinforcement ribs 70, 70 are provided in the vicinity of the cutaway P of the side wall 12j of the lower half 12. With respect to the shape of the reinforcement ribs 70, there is no special limit but the shape may be suitably selected as far as the reinforcement ribs are not brought into contact with the tape winding.

Further, shown in Fig. 25B is one in which tapers 72 are provided in the cutaway P of the side wall 12j of the lower half 12 in the range that the tape winding is not affected.

Furthermore, shown in Fig. 25C is one in which when the cutaway P is to be provided in the side wall 12j of the lower half 12, the side wall is not cut away up to the portion of the bottom surface 12a of the lower half 12 but a portion 74 corresponding to the height of the sheet interposed between the magnetic tape and the lower half is left.

The magnetic tape cassette in accordance with the fifth aspect of the present invention is constructed basically as above-mentioned.

A magnetic tape cassette in accordance with a sixth aspect of the present invention will now be described in detail with reference to Figs. 26 to 30.

Fig. 26 is a schematic perspective view of a magnetic tape cassette in accordance with a first embodiment of a sixth aspect of the present invention. Fig. 27 is a cross-sectional view of the front end center thereof from which an internal structure has been omitted. Additionally, in this description, the back-and-forth direction is represented by being made to correspond to the loading direction a of the magnetic tape cassette 200.

The magnetic tape cassette 200 is provided with a flat housing-shaped casing 202 obtained by coupling an upper half 210 (upper casing) and a lower half 212 (lower casing), a front lid 216 mounted at a front end of this casing 202 such that it can be moved to open or close and a slider 214 mounted slidably on a lower surface side.

Although not shown, the magnetic tape wound around the takeup hubs at the both sides is accommodated in the interior of this casing 202. The front face and the front bottom surface of the casing 202 are eliminated to form an opening for loading the tape to the recording/reproducing apparatus. The front lid 216 for opening/closing the opening for tape drawing at the front face of the casing 202 is released from the lock and opened or closed in response to the rearward movement of the above-mentioned slider 214 in accordance with the loading operation of the tape to the recording/reproducing apparatus. Further, the above-mentioned slider 214 opens and closes the opening on the bottom surface of the lower half 212 in accordance with the back-and-forth sliding movement along the direction a. Additionally, drive shaft insertion holes are opened on both sides of the lower half 212 and the slider 214. A lock mechanism is provided for locking the above-mentioned slider 214 in the opening position and the closing position. The lock mechanism is released in accordance with the loading to the recording/reproducing apparatus. The slider 214 is moved rearward to open the bottom surface opening to lock the opening position in the rearward position. The tape loading device is inserted into the opening thus formed to draw the tape forwardly and open the front lid 216 to enable recording and reproduction.

In such a magnetic tape cassette 200, a recess 220 is formed substantially in a center of the front of the top surface of the upper half 210. A roller 410a of the press engagement member 410 for positioning in the automatic cassette conveyance device 400, such as one shown in Fig. 38, is engaged therewith.

The front lid 216 has a lid 222 covering the front face of the casing 202 and side walls 224 continuously extending back and forth at both ends thereof. Pivots 226 of both side walls 224 are rotatably supported to the side surfaces of the upper half 210. The lid 222 has an upper wall 228 bent rearward at the top end thereof. Under the closing condition shown in the figure, the upper wall 228 is provided continuously with the top surface of the upper half 210. Additionally, the top surface front end of the upper half 210 is provided with a step 230 from which the upper portion has been removed. The upper wall 228 of the front lid 216 is located on this step 230. Further, this front lid 216 is biased in the closing direction by a return spring (not shown) provided in the pivot 226.

The front end of the upper surface of the upper half 210 and the rear end of the step 230 are connected to each other by way of a slant surface. The slant surface is so provided that upon moving the front lid 216 for opening/closing, the tip end of the upper wall 228 of the front lid 216 and the tip end of the top surface of the upper half 210 do not interfere with each other. In accordance with this, a gap 218 is formed between a rear end of the upper wall 228 of the front lid 216 and the top surface tip end of the upper half 210. Thus, there is a fear that the above-mentioned roller 410a might be engaged thereby.

Then, the upper wall 228 is formed such that the height of the top surface of the upper wall 228 of the above-mentioned front lid 216 is lower than the height of the top surface of the upper half 210. For example, this is done by forming the thickness of the upper wall 228 to be smaller than that of the portions therearound. On the other hand, the position of the top surface of the above-mentioned both side walls 224 is substantially equal to the position of the top surface of the upper half 210 and higher than the position of the top surface of the upper wall 228.

Additionally, the region where the top surface of the upper wall 228 of the front lid 216 is formed to be lower may be formed over the entire lid 222 except for both side walls 224 as shown in Fig. 26 or otherwise may be at least the region where the roller 410a passes in contact therewith in correspondence with the above-mentioned recess 220.

In accordance with this embodiment, the position of the top surface of the upper wall 228 of the front lid 216 is formed to be lower in height than that of the top surface of the casing 202 so that, even if there is the gap 218, the corner of the rear end of the top surface of the upper wall 228 is lower in height and thus the roller 410a is hardly engaged therewith. The roller 410a is thus smoothly moved to the top surface of the upper wall 228 from the top surface of the upper half 210. There is no force applied to press and open the front lid 216 during the conveyance using the cassette automatic conveying device 400. Furthermore, the top walls 228 of both side walls 224 are made large without being cut away to ensure the mechanical strength and enhance the reliability.

Fig. 28 is a central cross-sectional view of the front end of the upper half 210 and the upper portion of the font cover 216 from which an internal structure has been omitted in accordance with a second embodiment.

In this embodiment, a slope 232 which is higher in the front side is formed in a portion facing the above-mentioned gap 218 in the front side of the recess 220 formed on the top surface of the upper half 210. This slope 232 is provided so that the portion of the top surface adjacent to the rear end of the upper wall 228 of the front lid 216 through the above-mentioned gap 218 is higher in height than the rest of top surface of the upper half 210 and it gradually becomes higher from the rear side to the front end side and formed by a curved surface or a slant surface. Additionally, the upper wall 228 of the above-mentioned front lid 216 is provided to be at the same height as that of the top surface of the upper half 210.

With respect to the formation range of this slope 232, it may be provided in a range where at least the above-mentioned roller 410a passes in contact therewith. Further, the formation of the slope 232 may be performed by increasing the thickness of the upper half 210. Otherwise, it may be performed by warping the upper wall of the upper half 210.

According to this embodiment, the slope 232 which is gradually higher toward the front end side is formed at the front end of the top surface of the casing 202, whereby even if there is the gap 218, the roller 410a moves over the gap 218 as if it jumps over the gap from the position higher in height than that of the top surface of the front lid 216 when it moves along and over this slope 232. The roller thus moves from the top surface of the upper half 210 to the upper wall 228 without being engaged by the front lid 216. The front lid 216 is not subjected a force to press and open it during the conveyance by the cassette automatic conveying device 400.

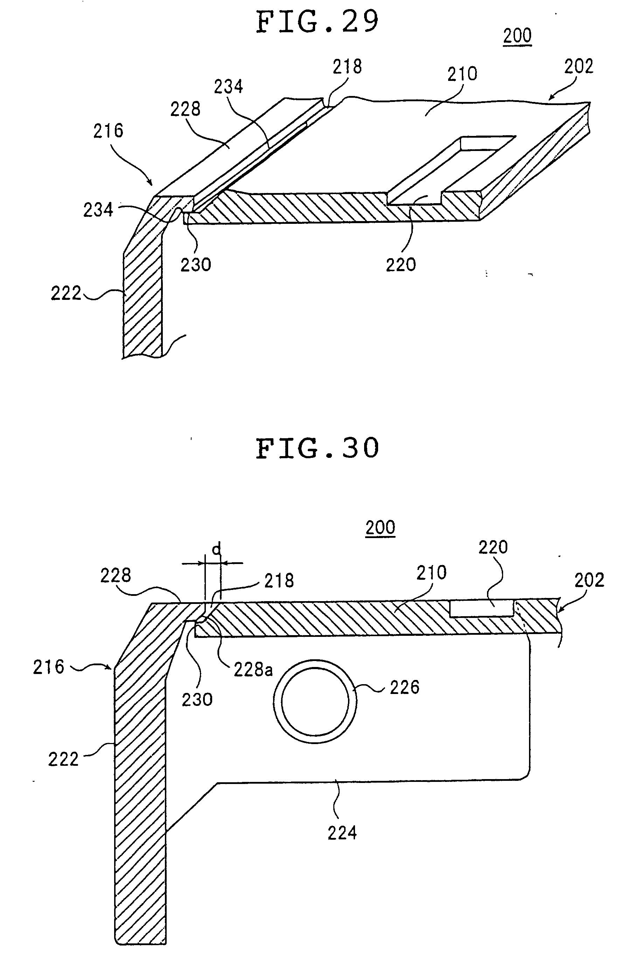

Fig. 29 is a sectional and perspective view of a primary portion of a front end of an upper half 210 and the top of the front lid 216 in accordance with a third embodiment, from which an internal structure of has been omitted.

In this embodiment, a reinforcement rib 234 for suppressing the deformation of the upper wall 228 of the front lid 216 in the front side of a recess 220 formed in the top surface of the upper half 210 is formed on the bottom surface of the upper wall 228. Further, under the closing condition of the front lid 216, the lower surface of the reinforcement rib 234 is at a position overlapping the top surface of the step 230 of the above-mentioned upper half 210. The rib is brought into contact with the step 230 upon being pressed by the roller 410a or upon deformation caused by other external force thereby suppressing the deformation of the front lid 216.

With respect to the formation area of this reinforcement rib 234, it may be formed over the area where at least the roller 410a passes in contact therewith. Additionally, the shape of this reinforcement rib 234 is limited to a specific one. However, it is necessary to take a structure for enhancing the bending strength by increasing the thickness of the upper wall 228, such as one using convex ribs extending in the right and left directions.

According to this embodiment, the reinforcement rib 234 is formed on the bottom surface of the upper wall 228 of the front lid 216, whereby the front lid 216 has a high rigidity and would hardly be deformed, the gap 218 is not widened, the roller 410a is not engaged by the front lid 216 but smoothly moves from the top surface of the upper half 210 to the top surface of the upper wall 228, and no force for pressing to open the front lid 216 during the conveyance by the automatic cassette conveyance device 400 is applied.

Fig. 30 is a sectional view of a primary part of a front end of an upper half 210 and the top of the front lid 216 in accordance with a fourth embodiment, from which an internal structure of has been omitted.

In this embodiment, a width d of the above-mentioned gap 218 between the front end of the upper half 210 and the rear end of the upper wall 228 of the front lid 216 is formed to be narrower or smaller. Further, in accordance with narrowing the width d of this gap 218, the lower surface corner 228a of the rear end of the upper wall 228 is removed like a C-shape so that its interference with the top surface front end of the upper half 210 is not generated upon opening/closing movement centered about the pivot 226 of the front lid 216.

In order to reduce the width d of this gap 218, the position of the end of the top surface of the upper half 210 is set on the further front side or the rear end of the upper wall 228 of the front lid 216 is set on the rear side. This corner 228a is partially removed so that the movement locus of the corner 228a at the lower surface rear end of the upper wall 228 in the opening/closing movement about the pivot 226 of the front lid 216 does not come into interference with the tip end corner of the upper surface of the upper half 210.

According to this embodiment, a width d of the gap 218 between a rear end of the front lid 216 and a front surface end of the upper half 210 is decreased so that the roller 410a moves through this gap 218 from the top surface of the upper half 210 to the top surface of the upper wall 228 without being engaged by the front lid 216. The front lid 216 is not subjected to the force for pressing and opening the front lid during the conveyance by the automatic cassette conveyance device 400. Further, the portion where the front lid interferes with the casing 202 in the opening/closing movement of the front lid 216 is removed to ensure the opening/closing operation of the front lid 216.

The magnetic tape in accordance with the sixth aspect of the present invention is constructed basically as above-mentioned.

The magnetic tape cassette in accordance with a seventh aspect of the present invention will now be described with reference to Figs. 31 to 32B.

Fig. 31 is a perspective view of an upper surface side of the magnetic tape cassette in accordance with a first embodiment of the seventh aspect of the present invention. Fig. 32A is a perspective view of a lower surface side of the magnetic tape cassette shown in Fig. 31. Fig. 32B is a cross-sectional view taken along the line X-X of Fig. 32A from which an internal structure has been removed. Additionally, the basic structure of the magnetic tape cassette 200 shown in Fig. 31 is the same as that shown in the above-mentioned Fig. 26. Since the same reference numerals are used to indicate to the same components, the explanation of Fig. 26 should be referred to for the explanation thereof.

In the magnetic tape cassette according to this aspect, a slider 214 installed slidably on the lower surface side of the lower half 212 has a bottom wall 240 and side walls 242 and is assembled so as to move slidably along a recess 236 formed in the bottom surface and the side surfaces of the lower half 212. An opening in the front of the bottom surface of the lower half is opened and closed in accordance with the back-and-forth sliding movement in the loading direction a. Additionally, drive shaft insertion holes 244 are formed on both sides of the slider 214 so that the holes coincide with the drive shaft insertion holes (not shown) opened in the lower half 212 when the slider is moved to the rearward position. Furthermore, a lock mechanism 246 for locking the slider 214 in either the opening position or the closing position is provided. In accordance with the loading operation to the recording/reproducing apparatus, the lock mechanism 246 is released, and the slider 214 is moved rearward to open the opening formed in bottom surface to lock the opening position in the rearward position. The tape loading device is inserted into the opening formed in the front which was thus opened to draw the tape forwardly and to open the front lid 216 thereby making it possible to perform the recording and reproduction.

In such a magnetic tape cassette 200, the front lid 216 has a lid 222 for covering a front surface of the casing 202 and side walls 224 extending from both ends thereof in the back-and-forth direction. Pivots 226 on the both side walls 224 are supported rotatably to the side surfaces of the upper half 210. A gap 218 is formed between an upper and rear of the lid 222 and an upper surface edge (tip) end of the upper half 210.

On the other hand, a step 238 having substantially the same height as that of the lower end of the lid 222 of the front lid 216 is formed at a rear end of a recess 236 along which the slider 214 is slid on the bottom surface of the lower half 212. This step 238 is formed by a slant surface obliquely to the bottom surface of the recess 236. The slant surface of this step 238 is provided at a position where it does not contact with the rear end of the slider 214 when the slider is moved to the opening position.

Additionally, the above-mentioned step 238 may be formed by a curved surface. The area where the slant surface or the curved surface is formed in this step 238 may be over the entire bottom surface of the lower half 212 as shown in Fig. 32A or may be over a part thereof.

Further, a recess 220 with which the roller 410a of the pressing engagement member 410 for positioning in the automatic cassette conveyance device 400 as shown in Fig. 38 is formed in a substantially center of the front of the upper surface of the upper half 210.

According to this embodiment, the rear end step 238 of the recess 238 through which the slider 214 is slid along the bottom surface of the lower half 212 is formed by the slant surface or the curved surface, whereby, even if there is the gap 218, the slanted step 238 is hardly engaged in the gap 218 by the slanted surface or the curved surface. The step 238 is thus moved smoothly onto the upper surface of the front lid 216 from the top surface of the upper half 210. Therefore, even in the slanted condition by the deep portion accommodating portion 406 in the automatic cassette conveyance device 400, there is no fear that the front lid 216 of the magnetic tape cassette 200, in the lower portion to be conveyed might not be applied with such force as to press and open it.

The magnetic tape cassette in accordance with the seventh aspect according to the present invention is constructed basically as above-mentioned.

As above-mentioned, the magnetic tape cassette according to the present invention and the antistatic processing method of the sheet used in this has been described in detail with various embodiments. It goes without saying that the present invention is not limited to the above-mentioned embodiments but various improvements or changes of design are possible within the scope not departing from the essence of the present invention.

### Industrial Applicability

As above-mentioned, according to the first aspect of the present invention, since the thickened portion (convex portion) is formed over the substantially entire surface in the movable range of the tape up to the vicinity of the tape outlet of the cassette on the outer surface of the sheet mounting portion of the lower half, it is possible to perform accurate positioning in the height direction at the tape outlet of the cassette. Then, even if the cassette is used again in another deck after not being used for a while or after generation of the change or the non-uniformity in winding height of the tape which has been generated after the various different recording/reproducing decks, with respect to a tape drawing guide of any deck and even if there is non-uniformity in height of the drawing guide, the tape height of the outermost tape may be kept substantially straight, and the tape is brought into contact with the drawing guide of the deck at a right angle to be drawn without suffering any damage thereto.

Further, according to the second aspect of the present invention, since the rib for positioning in the height direction is provided on the lower half side bottom surface of the tape takeup ring on the outer circumferential side of the takeup hub, it is possible to easily set and adjust the running height of the magnetic tape to make it possible to ensure smooth running of the magnetic tape.

Further, according to another aspect of the present invention, it is possible to reduce the electric resistance of the sheet and to prevent the adhesion of the dust or the like to the sheet, and further to reduce the impregnation amount of the antistatic agent to the sheet thereby eliminating side effects which could be caused by excessive amount of the antistatic agent, to keep the outer appearance and to avoid the degradation of the product performance.

Further, in the magnetic tape cassette in accordance with the first embodiment of the third aspect of the present invention, it is possible to set at minimum the floating distance of the takeup hub within the cassette casing and thus it is possible to reliably protect the tape in use, conveyance and storage of the magnetic tape cassette.

Further, in the magnetic tape cassette in accordance with the second embodiment of the third aspect of the present invention, in addition to the above-mentioned effects, it is possible to stabilize the height of the magnetic tape wound around the takeup hub and the position of the takeup hub thereby ensuring stable running of the tape within the recording/reproducing apparatus. Further, the position of the takeup hub is stabilized thereby reducing the rattle of the takeup hub in the horizontal direction thereby making it possible to wind more magnetic tape around the takeup hub.

Further, in the magnetic tape cassette in accordance with the first embodiment of the fourth aspect of the present invention, since the clearance of the takeup hub in the horizontal direction may be reduced, the floatable free movement of the takeup hub is reduced within the cassette casing, the mounting accuracy to the recording/reproducing apparatus is enhanced, the running of the tape in an unstable condition may be avoided, and no damage is applied to the magnetic tape in loading or removing the magnetic tape cassette, thereby making it possible to provide stable running of the tape within the recording/reproducing apparatus.

Further, since the playing displacement distance of the magnetic tape within the cassette may be made to a minimum, it is easy to protect the tape within the cassette and it is possible to wind a longer magnetic tape around the takeup hub.

Further, in the magnetic tape cassette in accordance with the second embodiment of the fourth aspect of the present invention, since the clearance of the takeup hub in the vertical direction can be reduced, the floatable free movement of the takeup hub within the cassette is reduced, the damage applied to the edge of the magnetic tape may be reduced, the position of the takeup hub is stabilized and the height of the magnetic tape may be stably maintained, whereby the tape drawing and accommodating in loading and ejecting the magnetic tape cassette to and from the recording/reproducing apparatus may be performed with high accuracy and the running of the tape may be performed under the stable condition.

Further, according to the fifth aspect of the present invention, since a certain area of the side wall including the center point in each of the right and left side walls of the lower half (i.e., the reduced thickened portion in the conventional art, which is formed with roundness in conformity with the outer circumference of the maximum tape winding diameter) is cut away to form the dust proof wall with the slider side walls, it is possible to form with the lower half side the winding diameter area of a size which is substantially equal to that formed with respect to the upper half and it is possible to increase the tape winding diameter area without increasing the cassette size (in particular, the size in the right and left direction of the cassette). As a result, it is possible to increase the amount of the tape which can be wound and it is possible to increase the storage capacity of the magnetic tape cassette.

Further, in the magnetic tape cassette in accordance with a sixth aspect of the present invention, the height of the upper surface of the portion with which the roller is brought into contact in the upper wall of the front lid is formed to be lower than that of the top surface of the casing, whereby it is possible to prevent the roller from engaging at the upper wall of this front lid, it is possible to prevent occurrence of deformation of the front lid during conveyance since no such force as to press and open the front lid is applied, whereby it is possible to perform good conveyance and to avoid occurrence of damages to the magnetic tape cassette. Further, the top surfaces on both side walls of the front lid are kept substantially at the same height as the top surface of the casing, thereby making it possible to suppress remarkable reduction in mechanical strength of the front lid.

Further, in another magnetic tape cassette in accordance with this aspect, a slope in which the top surface is gradually higher toward the front end side is formed in the portion forward of the recess and facing the gap between the top surface of the casing and the upper wall of the front lid, whereby the roller moves over the gap as if the roller jumps from the position higher in height than that of the top surface of the front lid when the roller rides over this slope thereby being prevented from being engaged by the front lid.

Furthermore, in another magnetic tape cassette in accordance with this aspect, a reinforcement rib is formed on the bottom surface of the top wall of the front lid, whereby the rigidity of the front lid is kept to be high and hardly changed, the roller is hardly engaged thereby and simultaneously, if the reinforcement rib is provided so as to be brought into contact with a part of the casing, it is possible to also suppress the deformation of the front lid due to an additional effect of the rigidity of the casing.

Further, in another magnetic tape cassette in accordance with this aspect, the gap between the front end of the top surface of the casing and the rear end of the top wall of the front lid is set to be small and simultaneously the portion where interference with the casing occurs in the opening/closing movement of the front lid is removed, whereby the roller may be prevented from being caught by the front lid while the opening/closing operation of the front lid is maintained.

As above-mentioned, according to the sixth aspect of the present invention, during conveyance by the automatic cassette conveyance device, the roller of the pressing engagement member is engaged with the recess of the top surface of the casing so that stable conveyance may be performed due to the good positioning, while simultaneously occurrence of defects caused by the roller being caught by the front lid may be prevented to obtain the magnetic tape cassette which is suitable for the automatic cassette conveyance device.

Further, in the magnetic tape cassette according to the seventh aspect of the present invention, the step of the recess through which the slider is slid along the bottom surface of the casing is formed by the slant surface or the curved surface, whereby even if the upper magnetic tape cassette is slanted, it is possible to prevent the rear end step thereof from being caught by the front lid of the magnetic tape cassette, to prevent occurrence of the deformation of the front lid since a force to press and open is not applied, to perform excellent conveyance and to prevent occurrence of damages or the like to the magnetic tape cassette.

As above-mentioned, according to the seventh aspect of the present invention, during conveyance by the automatic cassette conveyance device, it is possible to prevent the generation of the defect caused by the rear step of the upper cassette being caught by the front lid of the lower cassette under a slant condition in gravitational drop at the deep portion accommodating portion thereby making it possible to perform stable conveyance and to obtain the magnetic tape cassette suitable for the automatic cassette conveyance device.

## Claims

1. A magnetic tape cassette provided with a pair of takeup hubs around which a magnetic tape is wound within a cassette casing formed by coupling an upper half and a lower half in a lid-alignment manner accommodated by way of an upper sheet and a lower sheet having:
a thickened portion in said lower half being formed on an overall surface up to the vicinity of a tape outlet of the cassette on a surface outside a portion where said sheet is mounted.

2. The magnetic tape cassette according to claim 1, having a recess in at least one of an interval between said thickened portion and said sheet and an end of a tape outlet of said lower half.

3. A magnetic tape cassette provided with a pair of takeup hubs around which a magnetic tape is wound within a cassette casing formed by coupling an upper half and a lower half in a lid-alignment manner being accommodated comprising:
a rib for limiting a position in a height direction of said takeup hubs provided continuously or discretely on a concentric circle with a center of diameter of said takeup hub on bottom surfaces, facing to a bottom surface of the lower half, of a tape takeup ring having a magnetic tape winding surface on outer circumferential side surface of said takeup hub; and
a sheet interposed between said takeup hubs and said lower half.

4. The magnetic tape cassette according to claim 3, said sheet being a sheet impregnated with an antistatic agent on either one of both surfaces of said sheet.

5. The magnetic tape cassette according to claim 4, said sheet being a sheet impregnated with a partially different amount of antistatic agent on either one of both surfaces of said sheet.

6. A magnetic tape cassette provided with a takeup hub around which a magnetic tape is wound, being accommodated rotatably, whose cassette casing being formed by coupling an upper half and a lower half in a lid-alignment manner comprising:
at least one contact of said upper half and said takeup hub which are in contact with each other being formed by elastic material.

7. A magnetic tape cassette provided with a takeup hub around which a magnetic tape is wound, being rotatably accommodated, whose cassette casing being formed by coupling an upper half and a lower half in a lid-alignment manner having:
at least one contact of said upper half and said takeup hub in contact with each other formed by a member into which elastic material is inserted.

8. The magnetic tape cassette according to claim 7 having said contact formed by a member into which elastic material is inserted and a contact surface of said contact between said upper half and said takeup hub formed by material as same as material of said upper half or material of said takeup hub.

9. A magnetic tape cassette provided with a winding core around which a magnetic tape is wound, a takeup hub projecting on both ends of said winding core and provided with an upper end and a lower end coaxial with the winding core and with a smaller diameter than that of the winding core, an upper half including a hub holder having a cylindrical inner circumferential surface which is brought into contact with an outer circumferential surface of said upper end and a lower half provided with a hub holder having a cylindrical inner circumferential surface brought into contact with an outer circumferential surface of said lower end, in which said takeup hub around which the magnetic tape is wound is accommodated rotatably, whose cassette casing is formed by coupling said upper half and said lower half in a lid-alignment manner,
both difference between an inner diameter of the hub holder of said upper half and an outer diameter of the upper end of said takeup hub and difference between an inner diameter of the hub holder of said lower half and an outer diameter of the lower end of said takeup hub, being not greater than 1 millimeter.

10. The magnetic tape cassette according to claim 9, having a width of said magnetic tape being not greater than 6.5 millimeter and its thickness being not greater than 7 micrometers.

11. A magnetic tape cassette provided with a winding core around which a magnetic tape is wound, a hub projecting on both ends of said winding core and an upper end and a lower end being coaxial with the winding core, having a diameter smaller than a diameter of the winding core, and an upper half and a lower half forming a cassette casing for rotatably accommodating said takeup hub around which the magnetic tape is wound and coupled together in a lid-alignment manner, having:
at least one of a gap between said upper half and an upper end surface of said winding core of said takeup hub and a gap between said upper half and said upper end surface of said upper end, which occurs when said lower half is laid downward, is not greater than 0.5 millimeters.

12. The magnetic tape cassette according to claim 11, a width of said magnetic tape being not greater than 6.5 millimeters and a thickness of said magnetic tape being not greater than 7 micrometers.

13. The magnetic tape cassette according to claim 11 or 12, the gap between said upper half and the upper surface of said winding core being smaller than the gap between said upper half and the upper surface of said upper end.

14. A magnetic tape cassette provided with an upper half and a lower half forming a cassette casing for accommodating a pair of takeup hubs around which a magnetic tape is wound, having a side wall coupled together in a lid-alignment manner so as to expose only said magnetic tape corresponded to a portion tensioned between said pair of takeup hubs, and a slider having a rectangular bottom surface and side walls erected normally to on the bottom surface along both right and left ends in a longitudinal direction and mounted on an outer side lower surface of said lower half, which opens and closes reel shaft insertion holes of the bottom surface of the lower half and a guide insertion provided in a front side of said cassette casing, and slidable back and forth along the bottom surface of said lower half, comprising:
a cut-out constant area portion of side walls provided at both right and left ends of said lower half which corresponds to a maximum winding diameter outer circumference of the magnetic tape wound around said takeup hubs; and
a dust proof wall for said cassette casing being formed by a side wall of said slider.

15. A magnetic tape cassette loaded onto an automatic cassette conveyance device for accommodating and loading a plurality of magnetic tape cassettes and for sequentially conveying the magnetic tape cassettes using a conveying mechanism comprising:
a recess at which a pressing engagement member is engaged by a spring and a roller for positioning and stopping provided in said automatic cassette conveyance device is provided on an upper surface of a casing of said cassette, a front lid for opening/closing openings for drawing out a tape is provided swingably in a front surface of the casing, and a slider movable back and forth is provided on a lower surface side of said casing; and
at least an upper surface position of a portion of an upper wall of said front lid corresponded to said recess is formed to be lower than the upper surface of the casing, and upper surfaces of both side walls of said front lid are at the substantially same position as the upper surface of said casing.

16. A magnetic tape cassette loaded onto an automatic cassette conveyance device for accommodating a plurality of magnetic tape cassettes and for sequentially conveying said magnetic tape cassettes using a conveying mechanism having:
a recess at which a pressing engagement member is engaged by a spring and a roller for positioning and stopping provided in said automatic cassette conveyance device is provided on an upper surface of a casing of said cassette, a front lid for opening/closing openings for drawing out a tape is provided swingably in a front surface of said casing, and a slider which is movable back and forth is provided on a lower surface side of said casing; and
a slope whose upper surface is gradually higher toward the front end, at a portion of said casing at least on the at least forward side with relative to said recess and facing a gap with an upper wall of said front lid.

17. A magnetic tape cassette loaded onto an automatic cassette conveyance device for accommodating a plurality of magnetic tape cassettes and for sequentially conveying said magnetic tape cassettes using a conveying mechanism having:
a recess at which a pressing engagement member is engaged by a spring and a roller for positioning and stopping provided in said automatic cassette conveyance device is provided on an upper surface of a casing of said cassette;
a front lid for opening/closing openings for drawing out a tape is provided swingably in a front surface of the casing, and a slider which is movable back and forth is provided on a lower surface side of the casing; and
a reinforcement rib for suppressing deformation of an upper wall of said front lid being formed on at least a bottom surface of a front of said recess in said upper wall of said front lid.

18. A magnetic tape cassette loaded onto an automatic cassette conveyance device for accommodating a plurality of magnetic tape cassettes and for sequentially conveying said magnetic tape cassettes using a conveying mechanism having:
a recess at which a pressing engagement member is engaged by a spring and a roller for positioning and stopping provided in said automatic cassette conveyance device is provided on an upper surface of a casing of said cassette;
a front lid for opening/closing openings for drawing out a tape is provided swingably in a front surface of the casing; and a slider which is movable back and forth is provided on a lower surface side of said casing; and
a gap between a rear end of an upper wall of said front lid and a front end of an upper surface of said casing is set small and an interfering portion with said casing in opening/closing movement of said front lid is removed.

19. A magnetic tape cassette loaded onto an automatic cassette conveyance device for accommodating a plurality of magnetic tape cassettes and for sequentially conveying said magnetic tape cassettes using a conveying mechanism having:
a front lid for opening/closing openings for drawing out a tape being provided swingably in a front surface of said casing;
a slider which is movable back and forth being provided on a lower surface side of said casing; and
a recess in which said slider is swung being provided on a bottom surface of said casing; and
a step of a rear end of said recess being formed by a slant surface or a curved surface.

20. A method of performing an antistatic process to a sheet interposed between a magnetic tape wound around a winding hub and at least one of inner wall surfaces of an upper half and a lower half of a magnetic tape cassette provided with a housing-shaped cassette casing formed by coupling said upper half and said lower half together in a lid-alignment manner and said takeup hub held rotatably within said cassette casing for winding said magnetic tape, comprising the step of:
impregnating an antistatic agent onto either one of surfaces of said sheet.

21. The antistatic processing method according to claim 20, said either one surface being a surface of a side in contact with said lower half.

22. The antistatic processing method according to claim 20 or 21, a surface on a side where said antistatic agent is not impregnated onto said sheet, being masked in advance.

23. The antistatic processing method according to any one of claims 20 to 22, in said either one surface, an amount of said antistatic agent to be partially impregnated within on said surface, is changed.

24. The antistatic processing method according to any one of claims 20 to 23, said impregnation of said antistatic agent being performed by impregnating original material of said sheet with said antistatic agent using an immersion method.

25. The antistatic processing method according to any one of claims 20 to 23, the impregnation of said antistatic agent being performed by impregnating said sheet with. said antistatic agent at a step of punching out and forming said sheet from an original material of said sheet.

26. The antistatic processing method according to any one of claims 20 to 25, a pretreatment being applied onto said sheet by at least one of a plasma process, a corona charging process and an ultraviolet ray process before impregnation of said antistatic agent onto said sheet.
